(19) **Europäisches Patentamt European Patent Office Office européen des brevets**

(11) **EP 4 712 394 A1**

(12) **EUROPEAN PATENT APPLICATION**
published in accordance with Art. 153(4) EPC

(43) Date of publication:
**18.03.2026 Bulletin 2026/12**

(21) Application number: **24802919.1**

(22) Date of filing: **06.05.2024**

(51) International Patent Classification (IPC):
*H04L 5/00* (2006.01)

(52) Cooperative Patent Classification (CPC):
**H04L 5/00; H04W 72/20**

(86) International application number:
**PCT/CN2024/091177**

(87) International publication number:
**WO 2024/230637 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023 CN 202310531524**

(71) Applicant: **Apogee Networks, LLC Plano, TX 75024 (US)**

(72) Inventors:
• **WU, Lu Shanghai 201206 (CN)**
• **SONG, Shulin Shanghai 201206 (CN)**
• **ZHANG, Xiaobo Shanghai 201206 (CN)**

(74) Representative: **Gunzelmann, Rainer Wuesthoff & Wuesthoff Patentanwälte und Rechtsanwalt PartG mbB Schweigerstraße 2 81541 München (DE)**

(54) **METHOD AND APPARATUS USED IN NODE FOR WIRELESS COMMUNICATION**

(57)    Disclosed in the present application are a method and apparatus used in a node for wireless communication. The method comprises: a first node receiving a first CSI report configuration, wherein the first CSI report configuration indicates a first RS resource set, which comprises one or more RS resources; and sending the first CSI report, wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set, or the first opportunity set depends on the first index group. The method can determine RS resources for a CSI report, improving transmission reliability and saving on network energy.

FIG. 1

101 Receive a first CSI report configuration
102 Send a first CSI report
AA First node

**Description**

**Technical Field**

The present application relates to a transmission method and apparatus in a wireless communication system, in particular to a solution and apparatus for channel measurements and reports in the wireless communication system.

**Background Art**

Network Energy Saving (NES) is of great significance for environmental sustainability, reduction of impacts on the environment (greenhouse gas emissions), and saving of operating costs. With the popularity of 5G (the 5th Generation Partnership Project) in industries and geographic regions, very high data rates are required to handle more advanced services and applications (such as XR), resulting in increasingly dense networks, and the use of more antennas, larger bandwidths, and more frequency bands. In order to keep the impact of 5G on the environment within a controllable range, new solutions need to be studied to improve network energy saving. Therefore, the RAN#94 meeting of 3GPP (the 3rd Generation Partnership Project) approved a study item (SI) of "Study on network energy savings", which studies technical enhancements in aspects of time domains, frequency domains, spatial domains, power domains, etc.

**Summary of the Invention**

In existing systems, in order to send a CSI (Channel State Information) report, UE needs to obtain a channel measurement for a CSI report based on an RS (Reference Signal) resource, wherein a relationship between the CSI report and a transmission opportunity of the RS resource for the channel measurement is a key problem.

In view of the above, the present application discloses a solution. It should be noted that in the description of the present application, energy saving is only used as a typical application scenario or example; and the technical solution in the present application is also applicable to other scenarios facing similar problems (such as other non-base station energy saving scenarios, including but not limited to capacity enhancement systems, short-range communication systems, unlicensed frequency domain communication, IoT (Internet of Things), URLLC (Ultra Reliable Low Latency Communication) networks, Internet of Vehicles, etc.), and similar technical effects can be achieved. In addition, using a unified solution in different scenarios (including but not limited to base station energy saving scenarios) also helps to reduce hardware complexity and costs. In the absence of conflicts, embodiments and features in the embodiments in a first node of the present application can be applied to a second node, and vice versa.

In particular, interpretations of terminologies, nouns, functions, and variables in the present application (if not otherwise specified) can refer to definitions in 3GPP specification protocol TS36 series, TS38 series, and TS37 series. If necessary, reference may be made to 3GPP standards TS38.211, TS38.212, TS38.213, TS38.214, TS38.215, TS38.321, TS38.331, TS38.305, TS38.304, and TS37.355 to assist in understanding the present application.

The present application discloses a method used in a first node for wireless communication, characterized by comprising:

receiving a first CSI report configuration, the first CSI report configuration indicating a first RS resource set, and the first RS resource set comprising one or more RS resources; and
sending a first CSI report,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set.

As one embodiment, a problem to be solved by the present application comprises: how to determine a CSI report according to a transmission opportunity set for a channel measurement.

As one embodiment, benefits of using the above method comprise: a CSI report is flexibly adjusted according to a transmission opportunity set for a channel measurement.

As one embodiment, the benefits of using the above method comprise: a CSI report can be flexibly adjusted by different transmission opportunity sets for a channel measurement for different energy saving scenarios (such as energy saving and non-energy saving).

As one embodiment, the benefits of using the above method comprise: a CSI report can be flexibly adjusted by different transmission opportunity sets for a channel measurement for different duplex modes.

As one embodiment, the benefits of using the above method comprise: a CSI report can be flexibly adjusted by different transmission opportunity sets for a channel measurement for different interference environments.

As one embodiment, the benefits of using the above method comprise: a CSI report can be flexibly adjusted by different transmission opportunity sets for a channel measurement for different antennas/antenna arrays on a base station side.

As one embodiment, the benefits of using the above method comprise: a CSI report can be flexibly adjusted by different transmission opportunity sets for a channel measurement for different antennas/antenna arrays on a UE side.

As one embodiment, the benefits of using the above method comprise: a CSI report can be flexibly adjusted by different transmission opportunity sets for a channel measurement for different spatial characteristics.

As one embodiment, the benefits of using the above method comprise: a CSI report can be flexibly adjusted by different transmission opportunity sets for a channel measurement for different application scenarios.

As one embodiment, the benefits of using the above method comprise: improving the CSI estimation precision.

As one embodiment, the benefits of using the above method comprise: being applicable to different application scenarios/environments/modes, thereby increasing the flexibility.

As one embodiment, the benefits of using the above method comprise: simplifying the design of CSI measurements and reports.

The present application discloses a method used in a first node for wireless communication, characterized by comprising:

receiving a first CSI report configuration, the first CSI report configuration indicating a first RS resource set, and the first RS resource set comprising one or more RS resources; and
sending a first CSI report,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first opportunity set depends on the first index group.

As one embodiment, a problem to be solved by the present application comprises: how to determine a transmission opportunity set for a channel measurement for a CSI report.

As one embodiment, benefits of using the above method comprise: using an appropriate transmission opportunity set for a channel measurement for a CSI report.

As one embodiment, the benefits of using the above method comprise: improving the CSI estimation precision.

As one embodiment, the benefits of using the above method comprise: by determining an appropriate transmission opportunity set for a channel measurement, a CSI report for a given application scenario may be obtained.

As one embodiment, the benefits of using the above method comprise: by determining an appropriate transmission opportunity set for a channel measurement, a CSI report for a given energy-saving scenario (such as energy-saving and non-energy-saving) may be obtained.

As one embodiment, the benefits of using the above method comprise: by determining an appropriate transmission opportunity set for a channel measurement, a CSI report for a given duplex mode can be obtained.

As one embodiment, the benefits of using the above method comprise: by determining an appropriate transmission opportunity set for a channel measurement, a CSI report for a given interference environment may be obtained.

As one embodiment, the benefits of using the above method comprise: by determining an appropriate transmission opportunity set for a channel measurement, a CSI report for a given antenna/antenna array on a base station side may be obtained.

As one embodiment, the benefits of using the above method comprise: by determining an appropriate transmission opportunity set for a channel measurement, a CSI report for a given antenna/antenna array on a UE side may be obtained.

As one embodiment, the benefits of using the above method comprise: by determining an appropriate transmission opportunity set for a channel measurement, a CSI report for a given spatial characteristic may be obtained.

As one embodiment, the benefits of using the above method comprise: being applicable to different application scenarios/environments/modes, thereby increasing the flexibility.

As one embodiment, the benefits of using the above method comprise: simplifying the design of CSI measurements and reports.

As one embodiment, the benefits of the present application comprise: improving the transmission reliability.

As one embodiment, the benefits of the present application comprise: increasing system flexibility.

As one embodiment, the benefits of the present application comprise: saving the network energy.

As one embodiment, the benefits of the present application comprise: having good backward compatibility, and simplifying the design of CSI measurements and reports.

According to one aspect of the present application, it is characterized in that the first opportunity set comprises a latest transmission opportunity, which is not later than the CSI reference resource for the first CSI report, of at least one RS resource in the first RS resource set, the first index group is one index group among N index groups that is associated with the first opportunity set, and N is a positive integer greater than 1.

As one embodiment, the above method supports selecting an appropriate transmission opportunity set for a channel measurement in a network energy saving mode, thereby improving CSI estimation precision, saving network energy, and simplifying design of CSI measurements and reports.

As one embodiment, the benefits of using the above method comprise: a CSI report is flexibly adjusted according to a transmission opportunity set for a channel measurement.

As one embodiment, the benefits of using the above method comprise: according to an application scenario targeted by a transmission opportunity set for a channel measurement, a CSI report applicable to this application scenario is flexibly adjusted.

As one embodiment, the benefits of using the above method comprise: according to an energy saving scenario (such as energy saving and non-energy saving) targeted by a transmission opportunity set for a channel measurement, a CSI report applicable to this scenario is flexibly adjusted.

As one embodiment, the benefits of using the above method comprise: according to a duplex mode targeted by a transmission opportunity set for a channel measurement, a CSI report applicable to this duplex mode is flexibly adjusted.

As one embodiment, the benefits of using the above method comprise: according to an interference environment targeted by a transmission opportunity set for a channel measurement, a CSI report applicable to this interference environment is flexibly adjusted.

As one embodiment, the benefits of using the above method comprise: according to an antenna/antenna array on a base station side targeted by a transmission opportunity set for a channel measurement, a CSI report applicable to this antenna/antenna array on the base station side is flexibly adjusted.

As one embodiment, the benefits of using the above method comprise: according to an antenna/antenna array on a UE side targeted by a transmission opportunity set for a channel measurement, a CSI report applicable to this antenna/antenna array on the UE side is flexibly adjusted.

As one embodiment, the benefits of using the above method comprise: according to spatial characteristics targeted by a transmission opportunity set for a channel measurement, a CSI report applicable to these spatial characteristics is flexibly adjusted.

As one embodiment, the benefits of using the above method comprise: improving the CSI estimation precision.

As one embodiment, the benefits of using the above method comprise: being applicable to different application scenarios/environments/modes, thereby improving system flexibility.

As one embodiment, the benefits of using the above method comprise: simplifying the design of CSI measurements and reports.

According to one aspect of the present application, it is characterized in that one RS resource in the first RS resource set is associated with one or more index groups among N index groups, the first index group is one of the N index groups, and N is a positive integer greater than 1; and the first opportunity set comprises at least one transmission opportunity, which is not later than the CSI reference resource for the first CSI report, of at least one RS resource in the first RS resource set that is associated with the first index group.

As one embodiment, the benefits of using the above method comprise: by selecting an appropriate RS resource to determine an appropriate transmission opportunity set for a channel measurement.

As one embodiment, the benefits of using the above method comprise: improving the CSI estimation precision.

As one embodiment, the benefits of using the above method comprise: by selecting an appropriate RS resource to determine an appropriate transmission opportunity set for a channel measurement, a CSI report for a given application scenario can be obtained.

As one embodiment, the benefits of using the above method comprise: by selecting an appropriate RS resource to determine an appropriate transmission opportunity set for a channel measurement, a CSI report for a given energy saving scenario (such as energy saving and non-energy saving) can be obtained.

As one embodiment, the benefits of using the above method comprise: by selecting an appropriate RS resource to determine an appropriate transmission opportunity set for a channel measurement, a CSI report for a given duplex mode can be obtained.

As one embodiment, the benefits of using the above method comprise: by selecting an appropriate RS resource to determine an appropriate transmission opportunity set for a channel measurement, a CSI report for a given interference environment can be obtained.

As one embodiment, the benefits of using the above method comprise: by selecting an appropriate RS resource to determine an appropriate transmission opportunity set for a channel measurement, a CSI report for a given antenna/antenna array on a base station side can be obtained.

As one embodiment, the benefits of using the above method comprise: by selecting an appropriate RS resource to determine an appropriate transmission opportunity set for a channel measurement, a CSI report for a given antenna/antenna array on a UE side can be obtained.

As one embodiment, the benefits of using the above method comprise: by selecting an appropriate RS resource to determine an appropriate transmission opportunity set for a channel measurement, a CSI report for given spatial characteristics can be obtained.

As one embodiment, the benefits of using the above method comprise: being applicable to different application scenarios/environments/modes, thereby improving system flexibility.

As one embodiment, the benefits of using the above method comprise: simplifying the design of CSI measurements and reports.

According to one aspect of the present application, it is characterized in that one transmission opportunity of one RS resource in the first RS resource set is associated with one index group among the N index groups, the first index group is one of the N index groups, and N is a positive integer greater than 1; and the first opportunity set comprises at least one transmission opportunity, which is not later than the CSI reference resource for the first CSI report and is associated with the first index group, of at least one RS resource in the first RS resource set.

As one embodiment, the benefits of using the above method comprise: by selecting an appropriate transmission opportunity to determine an appropriate transmission opportunity set for a channel measurement.

As one embodiment, the benefits of using the above method comprise: improving the CSI estimation precision.

As one embodiment, the benefits of using the above method comprise: by selecting an appropriate transmission opportunity to determine an appropriate transmission opportunity set for a channel measurement, a CSI report for a given application scenario can be obtained.

As one embodiment, the benefits of using the above method comprise: by selecting an appropriate transmission opportunity to determine an appropriate transmission opportunity set for a channel measurement, a CSI report for a given energy saving scenario (such as energy saving and non-energy saving) can be obtained.

As one embodiment, the benefits of using the above method comprise: by selecting an appropriate transmission opportunity to determine an appropriate transmission opportunity set for a channel measurement, a CSI report for a given duplex mode can be obtained.

As one embodiment, the benefits of using the above method comprise: by selecting an appropriate transmission opportunity to determine an appropriate transmission opportunity set for a channel measurement, a CSI report for a given interference environment can be obtained.

As one embodiment, the benefits of using the above method comprise: by selecting an appropriate transmission opportunity to determine an appropriate transmission opportunity set for a channel measurement, a CSI report for a given antenna/antenna array on a base station side can be obtained.

As one embodiment, the benefits of using the above method comprise: by selecting an appropriate transmission opportunity to determine an appropriate transmission opportunity set for a channel measurement, a CSI report for a given antenna/antenna array on a UE side can be obtained.

As one embodiment, the benefits of using the above method comprise: by selecting an appropriate transmission opportunity to determine an appropriate transmission opportunity set for a channel measurement, a CSI report for given spatial characteristics can be obtained.

As one embodiment, the benefits of using the above method comprise: being applicable to different application scenarios/environments/modes, thereby improving system flexibility.

As one embodiment, the benefits of using the above method comprise: simplifying the design of CSI measurements and reports.

According to one aspect of the present application, it is characterized in that there exist two transmission opportunities of one RS resource in the first RS resource set that are respectively associated with different index groups among the N index groups, the first index group is one of the N index groups, and N is a positive integer greater than 1.

As one embodiment, the benefits of using the above method comprise: two transmission opportunities of one RS resource can be respectively in different application scenarios.

As one embodiment, the benefits of using the above method comprise: two transmission opportunities of one RS resource can be respectively in different energy saving scenarios (such as energy saving and non-energy saving).

As one embodiment, the benefits of using the above method comprise: two transmission opportunities of one RS resource can be respectively in different duplex modes.

As one embodiment, the benefits of using the above method comprise: two transmission opportunities of one RS resource can be respectively in different interference environments.

As one embodiment, the benefits of using the above method comprise: on two transmission opportunities of one RS resource, a base station side is respectively configured with different antennas/antenna arrays.

As one embodiment, the benefits of using the above method comprise: on two transmission opportunities of one RS resource, a UE side is respectively configured with different antennas/antenna arrays.

As one embodiment, two transmission opportunities of one RS resource can be respectively under different spatial characteristics.

As one embodiment, the benefits of using the above method comprise: being applicable to different application scenarios/environments/modes, thereby increasing the flexibility.

As one embodiment, the benefits of using the above method comprise: simplifying design of CSI measurements.

According to one aspect of the present application, it is characterized in that a plurality of transmission opportunities, which are not later than the CSI reference resource for the first CSI report, of one RS resource in the first RS resource set belong to the first opportunity set.

As one embodiment, in the above method, a plurality of transmission opportunities of one RS resource in the first RS resource set are used for generating the first CSI report, which improves CSI estimation precision and simplifies system design.

According to one aspect of the present application, it is characterized in that the first CSI report comprises at least a first resource indication, the first resource indication indicates a first RS resource, the first RS resource is one RS resource in the first RS resource set, and one or more transmission opportunities, which are not later than the CSI reference resource for the first CSI report, of the first RS resource belong to the first opportunity set; and the first RS resource is associated with the first index group, or one or more transmission opportunities of the first RS resource are associated with the first index group.

As one embodiment, the benefits of using the above method comprise: improving the CSI estimation precision.

As one embodiment, the benefits of using the above method comprise: being applicable to different application scenarios/environments/modes, thereby improving system flexibility.

As one embodiment, the benefits of using the above method comprise: simplifying the design of CSI measurements and reports.

The present application discloses a method used in a second node for wireless communication, characterized by comprising:

> sending a first CSI report configuration, the first CSI report configuration indicating a first RS resource set, and the first RS resource set comprising one or more RS resources; and
> receiving a first CSI report,
> wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set.

The present application discloses a method used in a second node for wireless communication, characterized by comprising:

> sending a first CSI report configuration, the first CSI report configuration indicating a first RS resource set, and the first RS resource set comprising one or more RS resources; and
> receiving a first CSI report,
> wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first opportunity set depends on the first index group.

According to one aspect of the present application, it is characterized in that the first opportunity set comprises a latest transmission opportunity, which is not later than the CSI reference resource for the first CSI report, of at least one RS resource in the first RS resource set, the first index group is one index group among N index groups that is associated with the first opportunity set, and N is a positive integer greater than 1.

According to one aspect of the present application, it is characterized in that one RS resource in the first RS resource set is associated with one or more index groups among the N index groups, the first index group is one of the N index groups, and N is a positive integer greater than 1; and the first opportunity set comprises at least one transmission opportunity, which is not later than the CSI reference resource for the first CSI report, of at least one RS resource in the first RS resource set that is associated with the first index group.

According to one aspect of the present application, it is characterized in that one transmission opportunity of one RS resource in the first RS resource set is associated with one index group among the N index groups, the first index group is one of the N index groups, and N is a positive integer greater than 1; and the first opportunity set comprises at least one transmission opportunity, which is not later than the CSI reference resource for the first CSI report and is associated with the first index group, of at least one RS resource in the first RS resource set.

According to one aspect of the present application, it is characterized in that there exist two transmission opportunities of one RS resource in the first RS resource set that are respectively associated with different index groups among the N index groups, the first index group is one of the N index groups, and N is a positive integer greater than 1.

According to one aspect of the present application, it is characterized in that a plurality of transmission opportunities, which are not later than the CSI reference resource for the first CSI report, of one RS resource in the first RS resource set belong to the first opportunity set.

According to one aspect of the present application, it is characterized in that the first CSI report comprises at least a first resource indication, the first resource indication indicates a first RS resource, the first RS resource is one RS resource in the first RS resource set, and one or more transmission opportunities, which are not later than the CSI reference resource for the first CSI report, of the first RS resource belong to the first opportunity set; and the first RS resource is associated with the first index group, or one or more transmission opportunities of the first RS resource are associated with the first index group.

The present application discloses a first node device for wireless communication, characterized by comprising:

a first receiver receiving a first CSI report configuration, the first CSI report configuration indicating a first RS resource set, and the first RS resource set comprising one or more RS resources; and
a first transmitter sending a first CSI report,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set.

The present application discloses a first node device for wireless communication, characterized by comprising:

a first receiver receiving a first CSI report configuration, the first CSI report configuration indicating a first RS resource set, and the first RS resource set comprising one or more RS resources; and
a first transmitter sending a first CSI report,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first opportunity set depends on the first index group.

The present application discloses a second node device for wireless communication, characterized by comprising:

a second transmitter sending a first CSI report configuration, the first CSI report configuration indicating a first RS resource set, and the first RS resource set comprising one or more RS resources; and
a second receiver receiving a first CSI report,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set.

The present application discloses a second node device for wireless communication, characterized by comprising:

a second transmitter sending a first CSI report configuration, the first CSI report configuration indicating a first RS resource set, and the first RS resource set comprising one or more RS resources; and
a second receiver receiving a first CSI report,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first opportunity set depends on the first index group.

As one embodiment, compared with a traditional solution, the present application has the following advantages:

- being applicable to different application scenarios/environments/modes, thereby improving flexibility;
- designing CSI measurements and reports;
- improving transmission reliability;
- increasing system flexibility;
- saving network energy;
- improving accuracy of CSI estimation; and
- improving system performance.

**Brief Description of the Drawings**

Other features, purposes and advantages of the present application will become more apparent by reading the detailed description of the non-limiting embodiments with reference to the following drawings:

FIG. 1 shows a flowchart of a first CSI report configuration and a first CSI report according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless transmission according to one embodiment of the present application;
FIG. 6 shows a schematic diagram of a first index group depending on a first opportunity set according to one embodiment of the present application;
FIG. 7 shows a schematic diagram of a first opportunity set depending on a first index group according to one embodiment of the present application;
FIG. 8 shows a schematic diagram of a first opportunity set depending on a first index group according to another embodiment of the present application;
FIG. 9 shows a schematic diagram of a relationship between a first RS resource set and N index groups according to one embodiment of the present application;
FIG. 10 shows a schematic diagram of a first opportunity set according to one embodiment of the present application;
FIG. 11 shows a schematic diagram of a first resource indication according to one embodiment of the present application;
FIG. 12 shows a structural block diagram of a processing apparatus used in a first node device according to one embodiment of the present application; and
FIG. 13 shows a structural block diagram of a processing apparatus used in a second node device according to one embodiment of the present application.

**Detailed Description of Embodiments**

The technical solutions of the present application will be further explained in detail below in conjunction with drawings. It should be noted that, in the absence of conflicts, embodiments and features in the embodiments in the present application may be arbitrarily combined with each other.

**Embodiment 1**

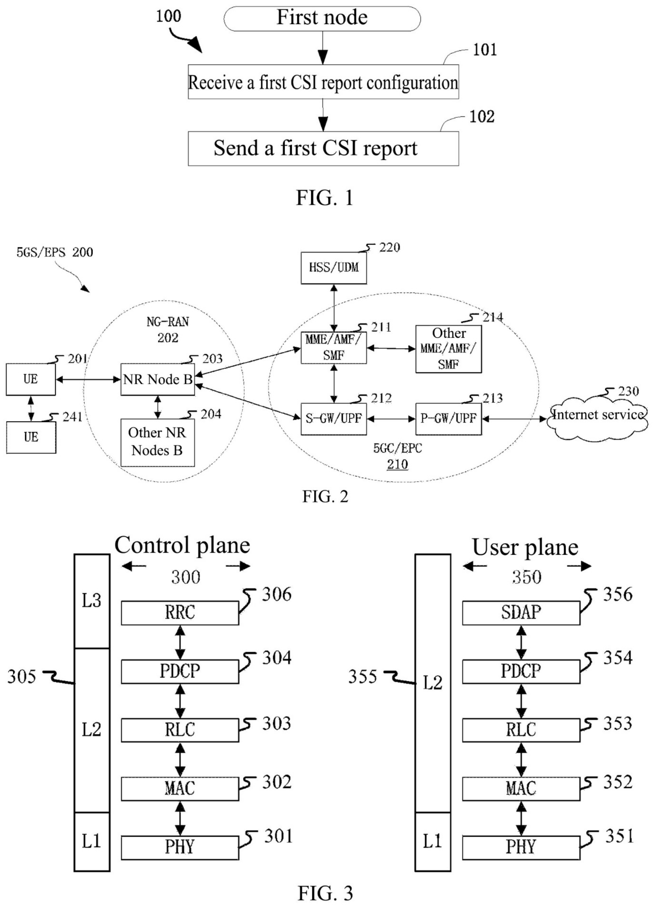

Embodiment 1 illustrates a flowchart of a first CSI report configuration and a first CSI report according to one embodiment of the present application, as shown in FIG. 1. In 100 shown in FIG. 1, each block represents one step.
In Embodiment 1, a first node in the present application receives the first CSI report configuration in step 101, the first CSI report configuration indicating a first RS resource set, and the first RS resource set comprising one or more RS resources; and sends the first CSI report in step 102, wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set, or the first opportunity set depends on the first index group.

As one embodiment, the first CSI (Channel Status Information) report configuration is carried by a higher layer signaling.

As one embodiment, the first CSI report configuration is carried by an RRC signaling.

As one embodiment, the first CSI report configuration comprises one RRC IE (Information Element).

As one embodiment, the first CSI report configuration comprises one or more RRC IEs.

As one embodiment, the first CSI report configuration is IE CSI-ReportConfig.

As one embodiment, a name of the first CSI report configuration comprises CSI-ReportConfig.

As one embodiment, the first CSI report configuration comprises a first CSI resource configuration, and the first CSI resource configuration indicates the first RS resource set.

As one sub-embodiment of the above embodiment, the first CSI resource configuration is one piece of IE CSI-ResourceConfig.

As one sub-embodiment of the above embodiment, the first CSI report configuration comprises a resourcesForChannelMeasurement field, and the resourcesForChannelMeasurement field comprised in the first CSI report configuration indicates the first CSI resource configuration.

As one embodiment, the first CSI report configuration comprises a plurality of CSI resource configurations, the first CSI resource configuration is one of the plurality of CSI resource configurations, and the first CSI resource configuration indicates the first RS resource set.

As one sub-embodiment of the above embodiment, other CSI resource configurations other than the first CSI resource configuration in the plurality of CSI resource configurations indicate a CSI-IM (Channel State Information-Interference Measurement) resource or at least a CSI-IM in an NZP CSI-RS resource for an interference measurement.

As one sub-embodiment of the above embodiment, other CSI resource configurations other than the first CSI resource configuration in the plurality of CSI resource configurations indicate one or more RS resources for an interference measurement.

As one sub-embodiment of the above embodiment, the plurality of CSI resource configurations comprise two CSI resource configurations, and one CSI resource configuration other than the first CSI resource configuration in the two CSI resource configurations indicates one or more CSI-IM resources.

As one sub-embodiment of the above embodiment, the plurality of CSI resource configurations comprise three CSI resource configurations, two CSI resource configurations other than the first CSI resource configuration in the three CSI resource configurations respectively indicate at least one CSI-IM (Channel State Information-Interference Measurement) resource and an NZP CSI-RS resource for an interference measurement.

As one embodiment, the first CSI resource configuration indicating the first RS resource set comprises an identifier or index of the first RS resource set.

As one embodiment, the first CSI resource configuration indicating the first RS resource set comprises an identifier or index of each RS resource in the first RS resource set.

As one embodiment, the first CSI report configuration comprises the resourcesForChannelMeasurement field, and the resourcesForChannelMeasurement field comprised in the first CSI report configuration indicates the first RS resource set.

As one embodiment, the first CSI configuration information comprises a csi-IM-ResourcesForInterference field, and the csi-IM-ResourcesForInterference field comprised in the first CSI configuration information indicates one or more CSI-IM resources. '

As one embodiment, the first CSI configuration information comprises the csi-IM-ResourcesForInterference field, and the csi-IM-ResourcesForInterference field comprised in the first CSI configuration information indicates one or more NZP CSI-RS resources for an interference measurement.

As one embodiment, the first CSI configuration information comprises an nzp-CSI-RS-ResourcesForInterference field, and the nzp-CSI-RS-ResourcesForInterference field comprised in the first CSI configuration information is used for indicating a third CSI resource configuration.

As one embodiment, specific definitions of IE CSI-ReportConfig, resourcesForChannelMeasurement, csi-IM-ResourcesForInterference, nzp-CSI-RS-ResourcesForInterference, IE CSI-ResourceConfig, and CSI-ResourceConfigId can be found in Chapter 6.3.2 of 3GPP TS 38.331.

As one embodiment, the first CSI report configuration comprises a reportConfigType (report configuration type) field; and the reportConfigType (report configuration type) field in the first CSI report configuration indicates which of the following is the first CSI report: periodic, semi-persistent on a PUSCH, semi-persistent on a PUCCH, or aperiodic.

As one embodiment, a channel measurement resource for the first CSI report configuration comprises the first RS resource set.

As one embodiment, a channel measurement resource for the first CSI report comprises the first RS resource set.

As one embodiment, a channel measurement resource for the first CSI report comprises part of RS resources in the first RS resource set.

As one embodiment, a channel measurement resource for the first CSI report comprises at least one RS resource in the first RS resource set.

Typically, a CSI-RS resource in the present application is an NZP (Non-Zero Power) CSI-RS resource.

As one embodiment, the first RS resource set comprises at least one of a CSI-RS (Channel State Information Reference Signal) resource or an SS/PBCH (Synchronization Signal/Physical Broadcast CHannel) block resource.

As one embodiment, the first RS resource set comprises one or more CSI-RS resources.

As one embodiment, the first RS resource set comprises a plurality of CSI-RS resources.

As one embodiment, the first RS resource set comprises one or more SS/PBCH block resources.

As one embodiment, the first RS resource set comprises a plurality of SS/PBCH block resources.

As one embodiment, each RS resource in the first RS resource set is a CSI-RS resource or an SS/PBCH block resource.

As one embodiment, each RS resource in the first RS resource set is a CSI-RS resource.

As one embodiment, each RS resource in the first RS resource set is an SS/PBCH block resource.

As one embodiment, each RS resource in the first RS resource set is periodic or semi-persistent or aperiodic.

As one embodiment, each RS resource in the first RS resource set is periodic or semi-persistent.

As one embodiment, each RS resource in the first RS resource set is periodic.

As one embodiment, each RS resource in the first RS resource set is semi-persistent.

As one embodiment, one RS resource belongs to a plurality of slots in a time domain, wherein part within one slot is one transmission opportunity of the one RS resource.

As one embodiment, one RS resource is a periodic RS resource or a semi-persistent RS resource, wherein part within one period is one transmission opportunity of the one RS resource.

As one embodiment, one RS resource is aperiodic, and one trigger of the one RS resource is one transmission opportunity of the one RS resource.

As one embodiment, the first RS resource set comprises at least one periodic or semi-persistent CSI-RS resource.

As one embodiment, the first CSI configuration comprises a higher layer parameter timeRestrictionForChannelMeasurements set to *"notConfigured"*.

As one embodiment, the first CSI configuration comprises a higher layer parameter timeRestrictionForChannelMeasurements set to "Configured".

As one embodiment, the CSI reference resource for the first CSI report is a frequency domain resource targeted by the first CSI report in a frequency domain.

As one embodiment, the CSI reference resource for the first CSI report is a subband or broadband targeted by the first CSI report in the frequency domain.

As one embodiment, the CSI reference resource for the first CSI report and a frequency domain resource targeted by the first CSI report belong to the same BWP (Bandwidth Part) in the frequency domain.

As one embodiment, the CSI reference resource for the first CSI report is a first downlink slot in the time domain, the first downlink slot depends on a second uplink slot, and the second uplink slot is an uplink slot sending the first CSI report.

As one embodiment, the CSI reference resource for the first CSI report is the first downlink slot in the time domain.

As one embodiment, the CSI reference resource for the first CSI report is one downlink slot.

As one embodiment, the CSI reference resource for the first CSI report depends on the second uplink slot.

As one embodiment, the first downlink slot depends on the second uplink slot.

As one embodiment, the second uplink slot is an uplink slotn'.

As one embodiment, the second uplink slot is an uplink slot sending the first CSI report.

As one embodiment, the second uplink slot is an uplink slot where a PUCCH bearing the first CSI report is located.

As one embodiment, the second uplink slot is an uplink slot where the PUSCH bearing the first CSI report is located.

As one embodiment, the description of the CSI reference resource for the first CSI report refers to Chapter 5.2.2.5 of 3GPP TS38.214.

As one embodiment, the first downlink slot is a downlink slot $n - n_{CSI\_ref} - K_{offset} \cdot \dfrac{2^{\mu_{DL}}}{2^{\mu_{K_{offset}}}}$, wherein $K_{offset}$ is configured by a higher layer signaling, and $\mu_{K_{offset}}$ is a subcarrier spacing configuration of $K_{offset}$.

As one embodiment, $n_{CSI\_ref}$ is a minimum value that is not less than $4 \cdot 2^{\mu_{DL}}$.

As one embodiment, $n_{CSI\_ref}$ is a minimum value that is not less than $5 \cdot 2^{\mu_{DL}}$.

As one embodiment, n is a sum of a first component and a second component.

As one embodiment, the first component is one integer.

As one embodiment, the first component is $\left\lfloor n' \cdot \dfrac{2^{\mu_{DL}}}{2^{\mu_{UL}}} \right\rfloor$, wherein $\mu_{DL}$ and $\mu_{UL}$ are respectively downlink and uplink subcarrier spacing configurations, and $\lfloor x \rfloor$ represents a round-down operation on x.

As one embodiment, the second component is one integer.

As one embodiment, the second component is $\left\lfloor \left( \dfrac{N^{CA}_{slot,offset,UL}}{2^{\mu_{offset,UL}}} - \dfrac{N^{CA}_{slot,offset,DL}}{2^{\mu_{offset,DL}}} \right) \cdot 2^{\mu_{DL}} \right\rfloor$, wherein

$N^{CA}_{slot,\,offset}$ and $\mu_{offset}$ are configured by a higher layer parameter ca-SlotOffset, and for detailed introduction, refer to Chapter 4.5 of 3GPP TS38.211.

As one embodiment, $n$ is $\left\lfloor n' \cdot \dfrac{2^{\mu_{DL}}}{2^{\mu_{UL}}} \right\rfloor + \left\lfloor \left( \dfrac{N^{CA}_{slot,offset,UL}}{2^{\mu_{offset,UL}}} - \dfrac{N^{CA}_{slot,offset,DL}}{2^{\mu_{offset,DL}}} \right) \cdot 2^{\mu_{DL}} \right\rfloor$.

As one embodiment, the first downlink slot is a downlink slot

$$\left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}} \ .$$

As one embodiment, the first CSI report configuration is used for configuring N CSI reports, the first CSI report is one of the N CSI reports, the N CSI reports respectively correspond to N index groups, the first index group is one index group among the N index groups that corresponds to the first CSI report, and N is a positive integer greater than 1.

As one embodiment, the first CSI report configuration is used for configuring the N CSI reports, the first CSI report is any CSI report among the N CSI reports, the N CSI reports respectively correspond to the N index groups, the first index group is one index group among the N index groups that corresponds to the first CSI report, and N is a positive integer greater than 1.

As one embodiment, the first CSI report configuration is used for configuring one aperiodic CSI report, and the first CSI report is one aperiodic CSI report configured by the first CSI report configuration.

As one embodiment, the first CSI report configuration is used for configuring one periodic or semi-persistent CSI report, and the first CSI report is a reporting instance of the periodic or semi-persistent CSI report configured by the first CSI report configuration.

As one embodiment, the first CSI report configuration is used for configuring one periodic CSI report, and the first CSI report is a reporting instance of the periodic CSI report configured by the first CSI report configuration.

As one embodiment, the first CSI report configuration is used for configuring one semi-persistent CSI report, and the first CSI report is a reporting instance of the semi-persistent CSI report configured by the first CSI report configuration.

As one embodiment, the first CSI report configuration is used for configuring N periodic CSI reports, and the first CSI report is a reporting instance of one periodic CSI report among the N periodic CSI reports.

As one sub-embodiment of the above embodiment, the N periodic CSI reports respectively correspond to the N index groups, the first index group is one index group among the N index groups that corresponds to the first CSI report, and N is a positive integer greater than 1.

As one embodiment, the first CSI report configuration is used for configuring N semi-persistent CSI reports, and the first CSI report is a reporting instance of one semi-persistent CSI report among the N semi-persistent CSI reports.

As one sub-embodiment of the above embodiment, the N semi-persistent CSI reports respectively correspond to the N index groups, the first index group is one index group among the N index groups that corresponds to the first CSI report, and N is a positive integer greater than 1.

As one embodiment, the first CSI report configuration is used for configuring N aperiodic CSI reports, and the first CSI report is one aperiodic CSI report among the N aperiodic CSI reports.

As one sub-embodiment of the above embodiment, the N aperiodic CSI reports respectively correspond to the N index groups, the first index group is one index group among the N index groups that corresponds to the first CSI report, and N is a positive integer greater than 1.

As one embodiment, a reporting instance of one periodic CSI report is a report of the one periodic CSI report within one period.

As one embodiment, a reporting instance of one semi-persistent CSI report is a report of the one semi-persistent CSI report within one period.

As one embodiment, the first CSI report is transmitted on a physical channel.

As one embodiment, the first CSI report is transmitted on a PUSCH (Physical Uplink Shared Channel).

As one embodiment, the first CSI report is transmitted on a PUCCH (Physical Uplink Control Channel).

As one embodiment, the first CSI report is periodic or semi-persistent.

As one embodiment, the first CSI report is semi-persistent, and the first CSI report is activated by one MAC CE.

As one embodiment, a name of a MAC CE that activates the first CSI report comprises SP CSI reporting on PUCCH Activation MAC CE.

As one embodiment, the first CSI report is aperiodic, the first CSI report is triggered by one piece of DCI (Downlink Control Information), the one piece of DCI comprises a CSI request field, the CSI request field of the one piece of DCI is used for indicating one trigger state, and the one trigger state indicates the first CSI report configuration.

As one embodiment, the first CSI report is semi-persistent, and when the first node receives one activation command, the first node sends the first CSI report on a PUCCH.

As one embodiment, the one activation command comprises SP CSI reporting on PUCCH Activation MAC CE.

As one embodiment, the first CSI report is semi-persistent, and when the first node is triggered by the one piece of DCI, the first node sends the first CSI report on a PUSCH.

As one embodiment, the first CSI report configuration also indicates a report quantity comprised in the first CSI report.

As one embodiment, the first CSI report configuration comprises a reportQuantity field, and the field in the first CSI report configuration indicates a report quantity comprised in the first CSI report.

As one embodiment, the report quantity comprised in the first CSI report comprises at least one of a CQI (Channel quality indicator), a PMI (Precoding Matrix Indicator), a CRI (CSI-RS Resource Indicator), an SS/PBCH Block Resource indicator (SSBRI), a Layer Indicator (LI), an RI (Rank Indicator), an L1-RSRP (Layer 1 reference signal received power) or an L1-SINR (Layer 1 signal-to-noise and interference ratio).

As one embodiment, the first CSI report comprises a CRI or an SSBRI, and an L1-RSRP.

As one embodiment, the first CSI report comprises a CRI or an SSBRI, and an L1-SINR.

As one embodiment, the first CSI report comprises a first resource indication and an L1-RSRP.

As one embodiment, the first CSI report comprises the first resource indication and an L1-SINR.

As one embodiment, the first CSI report at least comprises the first resource indication.

As one embodiment, the first CSI report at least comprises a CRI.

As one embodiment, the first CSI report at least comprises a CQI.

As one embodiment, the first CSI report at least comprises a CRI and a CQI.

As one embodiment, the first CSI report at least comprises a CRI and a CQI, and the first resource indication is a CRI.

As one embodiment, the first CSI report comprises a CRI, an RI, a PMI, and a CQI.

As one embodiment, the first CSI report comprises a CRI, an RI, an LI, a PMI, and a CQI.

As one embodiment, the first CSI report comprises a CRI, an RI, and a PMI.

As one embodiment, the first CSI report comprises a CRI, an RI, and a CQI.

As one embodiment, the first CSI report comprises the first resource indication, an RI, a PMI, and a CQI, and the first resource indication is a CRI.

As one embodiment, the first CSI report comprises the first resource indication, an RI, an LI, a PMI, and a CQI, and the first resource indication is a CRI.

As one embodiment, the first CSI report comprises the first resource indication, an RI, and a PMI, and the first resource indication is a CRI.

As one embodiment, the first CSI report comprises the first resource indication, an RI, and a CQI, and the first resource indication is a CRI.

As one embodiment, the first CSI report at least comprises the first resource indication, the first resource indication indicates a first RS resource, and the first RS resource is one RS resource in the first RS resource set.

As one embodiment, the first RS resource is a CSI-RS resource, and the first resource indication is a CRI (CSI-RS Resource Indicator).

As one embodiment, the first RS resource is an SS/PBCH block resource, and the first resource indication is an SSBRI (SS/PBCH Block Resource indicator).

As one embodiment, the first RS resource set comprises a plurality of CSI-RS resources, and the first resource indication is a CRI (CSI-RS Resource Indicator).

As one embodiment, the first RS resource set comprises a plurality of SS/PBCH block resources, and the first resource indication is an SSBRI (SS/PBCH Block Resource indicator).

As one embodiment, the meaning of "the first resource indication indicates a first RS resource" means: the first resource indication explicitly indicates the first RS resource.

As one embodiment, the meaning of "the first resource indication indicates a first RS resource" means: the first resource indication implicitly indicates the first RS resource.

As one embodiment, the meaning of "the first resource indication indicates a first RS resource" means: the first resource indication directly indicates the first RS resource.

As one embodiment, the meaning of "the first resource indication indicates a first RS resource" means: the first resource indication indirectly indicates the first RS resource.

As one embodiment, the meaning of "the first resource indication indicates a first RS resource" means: the first resource indication is used for indicating the first RS resource from the first RS resource set.

As one embodiment, the meaning of "the first resource indication indicates a first RS resource" means: the first resource indication is an ordering of the first RS resource in the first RS resource set.

As one embodiment, a load size of the first resource indication depends on the number of RS resources comprised in the first RS resource set.

As one embodiment, the number of RS resources comprised in the first RS resource set is $a$, and the load size of the first resource indication is $\lceil \log_2 a \rceil$ bits.

Benefits of the above method include but are not limited to: the first RS resource may be indicated from the first RS resource set, and the load size of the first resource indication is only related to the number of RS resources comprised in the first RS resource set, and does not change with changes of the first index group.

As one embodiment, the meaning of "the first resource indication indicates a first RS resource" means: the first resource indication is used for indicating the first RS resource from a first RS resource group, and the first RS resource group is composed of at least one RS resource in the first RS resource set.

As one embodiment, the meaning of "the first resource indication indicates a first RS resource" means: the first resource indication is an ordering of the first RS resource in the first RS resource group, and the first RS resource group is composed of at least one RS resource in the first RS resource set.

As one embodiment, the load size of the first resource indication depends on the number of RS resources comprised in the first RS resource group, and the first RS resource group is composed of at least one RS resource in the first RS resource set.

As one embodiment, the number of RS resources comprised in the first RS resource group is b, and the load size of the first resource indication is $\lceil \log_2 b \rceil$ bits.

Benefits of the above method include but are not limited to: the first RS resource may be indicated from part of RS resources of the first RS resource set, thereby saving the load size of the first resource indication.

Typically, the load size of the first resource indication is the number of bits comprised in the first resource indication.

As one embodiment, the meaning of "a first opportunity set comprises at least one transmission opportunity, which is not later than a CSI reference resource for the first CSI report, of at least one RS resource in the first RS resource set" means: the first opportunity set comprises one transmission opportunity, which is not later than the CSI reference resource for the first CSI report, of one RS resource in the first RS resource set.

As one embodiment, the meaning of "a first opportunity set comprises at least one transmission opportunity, which is not later than a CSI reference resource for the first CSI report, of at least one RS resource in the first RS resource set" means: the first opportunity set comprises a plurality of transmission opportunities, which are not later than the CSI reference resource for the first CSI report, of one RS resource in the first RS resource set.

As one embodiment, the meaning of "a first opportunity set comprises at least one transmission opportunity, which is not later than a CSI reference resource for the first CSI report, of at least one RS resource in the first RS resource set" means: the first CSI report comprises the first resource indication, the first resource indication indicates the first RS resource, and the first RS resource is one RS resource in the first RS resource set; and the first opportunity set comprises one transmission opportunity, which is not later than the CSI reference resource for the first CSI report, of the first RS resource.

As one embodiment, the meaning of "a first opportunity set comprises at least one transmission opportunity, which is not later than a CSI reference resource for the first CSI report, of at least one RS resource in the first RS resource set" means: the first CSI report comprises the first resource indication, the first resource indication indicates the first RS resource, and the first RS resource is one RS resource in the first RS resource set; and the first opportunity set comprises a plurality of transmission opportunities, which are not later than the CSI reference resource for the first CSI report, of the first RS resource.

As one embodiment, the meaning of "a first opportunity set comprises at least one transmission opportunity, which is not later than a CSI reference resource for the first CSI report, of at least one RS resource in the first RS resource set" means: the first opportunity set comprises at least one transmission opportunity, which is not later than the CSI reference resource for the first CSI report, of each RS resource in the first RS resource set.

As one embodiment, the meaning of "a first opportunity set comprises at least one transmission opportunity, which is not later than a CSI reference resource for the first CSI report, of at least one RS resource in the first RS resource set" means: the first opportunity set comprises at least one transmission opportunity, which is not later than the CSI reference resource for the first CSI report, of each RS resource in part of RS resources in the first RS resource set.

As one embodiment, the meaning of "a first opportunity set comprises at least one transmission opportunity, which is not later than a CSI reference resource for the first CSI report, of at least one RS resource in the first RS resource set" means: the first RS resource group is composed of at least one RS resource in the first RS resource set, and the first opportunity set comprises at least one transmission opportunity, which is not later than the CSI reference resource for the first CSI report, of each RS resource in the first RS resource group.

As one embodiment, the meaning of "a first opportunity set comprises at least one transmission opportunity, which is not later than a CSI reference resource for the first CSI report, of at least one RS resource in the first RS resource set" means: the first RS resource group is composed of at least one RS resource in the first RS resource set, and the first opportunity set comprises one transmission opportunity, which is not later than the CSI reference resource for the first CSI report, of each RS resource in the first RS resource group.

As one embodiment, the meaning of "a first opportunity set comprises at least one transmission opportunity, which is not later than a CSI reference resource for the first CSI report, of at least one RS resource in the first RS resource set" means: the first RS resource group is composed of at least one RS resource in the first RS resource set, and the first opportunity set comprises at least one transmission opportunity, which is not later than the CSI reference resource for the first CSI report, of each RS resource in at least one RS resource in the first RS resource group.

As one embodiment, the meaning of "a first opportunity set comprises at least one transmission opportunity, which is not later than a CSI reference resource for the first CSI report, of at least one RS resource in the first RS resource set" means: the first RS resource group is composed of at least one RS resource in the first RS resource set, and the first opportunity set comprises one transmission opportunity, which is not later than the CSI reference resource for the first CSI report, of each RS resource in at least one RS resource in the first RS resource group.

As one embodiment, the meaning of "the first opportunity set is used for obtaining a channel measurement for calculating the first CSI report" comprises: channel information measured in the first opportunity set is used for calculating the first CSI report.

As one embodiment, the meaning of "the first opportunity set is used for obtaining a channel measurement for calculating the first CSI report" comprises: part of channel information among channel information measured in the first opportunity set is used for calculating the first CSI report.

As one embodiment, the meaning of "the first opportunity set is used for obtaining a channel measurement for calculating the first CSI report" comprises: channel information measured for at least one RS resource in the first RS resource set comprised in the first opportunity set is used for calculating the first CSI report.

As one embodiment, the meaning of "the first opportunity set is used for obtaining a channel measurement for calculating the first CSI report" comprises: channel information measured for one RS resource in the first RS resource set comprised in the first opportunity set is used for calculating the first CSI report.

As one embodiment, the meaning of "the first opportunity set is used for obtaining a channel measurement for calculating the first CSI report" comprises: channel information measured for one transmission opportunity of any RS resource in at least one RS resource in the first RS resource set comprised in the first opportunity set is used for calculating the first CSI report.

As one embodiment, the meaning of "the first opportunity set is used for obtaining a channel measurement for calculating the first CSI report" comprises: channel information measured for at least one transmission opportunity of any RS resource in at least one RS resource in the first RS resource set comprised in the first opportunity set is used for calculating the first CSI report.

As one embodiment, how the first opportunity set is used for obtaining a channel measurement for calculating the first CSI report is independently determined by a manufacturer of the first node, or is implementation-dependent. A typical but non-limiting implementation is described below:

the first CSI report comprises at least the first resource indication, the first resource indication indicates the first RS resource, and the first RS resource is one RS resource in the first RS resource set; at least one transmission opportunity, which is not later than the CSI reference resource for the first CSI report, of the first RS resource belongs to the first opportunity set; and the first node performs a measurement on the first opportunity set for obtaining a channel parameter matrix $H_{r \times t}$, wherein r, t are respectively the number of receiving antennas and an antenna port number of the first RS resource.

As one embodiment, a plurality of pieces of CSI are respectively obtained by performing a measurement on at least one RS resource in the first RS resource set, and the first CSI report comprises a best one of the plurality of pieces of CSI.

As one embodiment, a plurality of SINRs are respectively obtained by performing a measurement on at least one RS resource in the first RS resource set, and the first CSI report comprises a best one of the plurality of SINRs.

As one embodiment, a plurality of pieces of RSRP are respectively obtained by performing a measurement on at least one RS resource in the first RS resource set, and the first CSI report comprises a best one of the plurality of pieces of RSRP.

As one embodiment, a plurality of CQIs are respectively obtained by performing a measurement on at least one RS resource in the first RS resource set, and the first CSI report comprises a best one of the plurality of CQIs.

As one embodiment, the plurality of SINRs are respectively obtained by performing a measurement on at least one RS resource in the first RS resource set, and the first CSI report comprises a maximum one of the plurality of SINRs.

As one embodiment, the plurality of pieces of RSRP are respectively obtained by performing a measurement on at least one RS resource in the first RS resource set, and the first CSI report comprises a maximum one of the plurality of pieces of RSRP.

As one embodiment, a plurality of pieces of RSRQ are respectively obtained by performing a measurement on at least one RS resource in the first RS resource set, and the first CSI report comprises a best one of the plurality of pieces of RSRQ.

As one embodiment, the first CSI report is generated by performing a channel measurement on at least one RS resource in the first RS resource set and according to a maximum transmission capacity criterion.

As one embodiment, the first CSI report is generated by performing a channel measurement on at least one RS resource in the first RS resource set and according to a maximum SINR criterion.

As one embodiment, the first CSI report is generated by performing a channel measurement on at least one RS resource in the first RS resource set and according to a maximum RSRP criterion.

As one embodiment, the first CSI report is generated by performing a channel measurement on at least one RS resource in the first RS resource set and according to a minimum BLER (Block Error Rate) criterion.

As one embodiment, the first CSI report is generated by performing a channel measurement on at least one RS resource in the first RS resource set and according to a minimum UE implementation complexity criterion.

As one embodiment, the first CSI report is generated by performing a channel measurement on at least one RS resource in the first RS resource set and according to a minimum required computation time criterion.

Under the limitations of the above method or embodiments, the specific algorithm for calculating the first CSI report is independently determined by a manufacturer of the first node, or is implementation-dependent. A typical but non-limiting implementation is described below:

the first CSI report comprises the first resource indication and a CQI, the first resource indication indicates the first RS resource, and the first RS resource is one RS resource in the first RS resource set; at least one transmission opportunity, which is not later than the CSI reference resource for the first CSI report, of the first RS resource belongs to the first opportunity set; and the first node first performs a measurement on the first opportunity set for obtaining the channel parameter matrix $H_{r \times t}$, wherein r, t are respectively the number of receiving antennas and an antenna port number of the first RS resource; power adjustment is performed on the channel parameter matrix $H_{r \times t}$ and the adjusted channel parameter matrix is $\sqrt{P} \cdot H_{r \times t}$, wherein P is an assumed ratio of PDSCH EPRE to CSI-RS EPRE; under a condition of using a precoding matrix $W_{t \times l}$, a precoded channel parameter matrix is $\sqrt{P} \cdot H_{r \times t} \cdot W_{t \times l}$, wherein $l$ is a rank or the number of layers, in one case, $l$ is a positive integer not greater than t, in another case, the precoding matrix is a unit matrix, and at this time, $t = l$; and an equivalent channel capacity of $H_{r \times t} \cdot W_{t \times l}$ is calculated using a criterion such as an SINR (Signal Interference Noise Ratio), EESM (Exponential Effective SINR Mapping), or an RBIR (Received Block mean mutual Information Ratio), and then a CQI comprised in the first CSI report is determined through table lookup or other ways by the equivalent channel capacity. Generally speaking, the calculation of the equivalent channel capacity requires the first node to estimate an interference (comprising noise), the first CSI report configuration also indicates an RS resource for an interference measurement, and an accurate measurement interference can be obtained by performing a measurement on one or more transmission opportunities of the RS resource for the interference measurement by the first node. In general, the direct mapping from the equivalent channel capacity to the CQI value depends on the receiver performance, or hardware-related factors such as the modulation scheme.

As one embodiment, the meaning of "the first CSI report corresponds to a first index group" comprises: the first CSI report depends on only the first index group in the N index groups, and N is a positive integer greater than 1.

As one embodiment, the meaning of "the first CSI report corresponds to a first index group" comprises: the first index group depends on the first opportunity set, and the first opportunity set is used for obtaining a channel measurement for calculating the first CSI report.

As one embodiment, the meaning of "the first CSI report corresponds to a first index group" comprises: being used for obtaining a channel measurement for calculating the first CSI report depends on the first index group.

As one embodiment, the meaning of "the first CSI report corresponds to a first index group" comprises: the first opportunity set depends on the first index group, and the first opportunity set is used for obtaining a channel measurement for calculating the first CSI report.

As one embodiment, the meaning of "the first CSI report corresponds to a first index group" comprises: the first index group is configured to the first CSI report.

As one embodiment, the meaning of "the first CSI report corresponds to a first index group" comprises: the first CSI report configuration indicates the first index group.

As one embodiment, the meaning of "the first CSI report corresponds to a first index group" comprises: the first CSI report configuration comprises the first index group.

As one embodiment, the meaning of "the first CSI report corresponds to a first index group" comprises: the first index group indicates configuration information related to the first CSI report.

As one embodiment, the meaning of "the first CSI report corresponds to a first index group" comprises: which RS resource or RS resources in the first RS resource set is/are used for obtaining a channel measurement for calculating the first CSI report depends on the first index group.

As one embodiment, the meaning of "the first CSI report corresponds to a first index group" comprises: which RS resource or RS resources in the first RS resource set have one or more transmission opportunities comprised in the first opportunity set depends on the first index group.

As one embodiment, the meaning of "the first CSI report corresponds to a first index group" comprises: the first opportunity set comprises at least one transmission opportunity, which is not later than the CSI reference resource for the first CSI report, of each RS resource in the first RS resource group, the first RS resource group is composed of at least one RS resource in the first RS resource set, and determination of the first RS resource group depends on the first index group.

As one embodiment, the meaning of "the first CSI report corresponds to a first index group" comprises: the first opportunity set comprises at least one transmission opportunity, which is not later than the CSI reference resource for the first CSI report, of each RS resource in at least one RS resource in the first RS resource group, the first RS resource group is composed of at least one RS resource in the first RS resource set, and determination of the first RS resource group depends on the first index group.

As one embodiment, the meaning of "the first CSI report corresponds to a first index group" comprises: the first CSI report comprises the first resource indication, the first resource indication indicates the first RS resource, the first RS resource is one RS resource in the first RS resource set, and determination of the first RS resource depends on the first index group.

As one embodiment, the meaning of "the first CSI report corresponds to a first index group" comprises: the first CSI report comprises the first resource indication, the first resource indication indicates the first RS resource, the first RS resource is one RS resource in the first RS resource set, and the load size of the first resource indication depends on the first index group.

As one embodiment, the meaning of "the first CSI report corresponds to a first index group" comprises: the first CSI report comprises the first resource indication, the first resource indication indicates the first RS resource, the first RS resource is one RS resource in the first RS resource set, the first RS resource group is composed of at least one RS resource in the first RS resource set, and determination of the first RS resource group depends on the first index group.

As one embodiment, the meaning of "determination of the first RS resource depends on the first index group" comprises: the first RS resource is one RS resource in the first RS resource set that is associated with the first index group.

As one embodiment, the meaning of "determination of the first RS resource depends on the first index group" comprises: the first RS resource is one RS resource in the first RS resource set that meets "there exists one transmission opportunity associated with the first index group".

As one embodiment, the meaning of "determination of the first RS resource group depends on the first index group" comprises: the first RS resource group comprises at least one RS resource in the first RS resource set that is associated with the first index group.

As one embodiment, the meaning of "determination of the first RS resource group depends on the first index group" comprises: the first RS resource group comprises all RS resources in the first RS resource set that are associated with the first index group.

As one embodiment, the meaning of "determination of the first RS resource group depends on the first index group" comprises: the first RS resource group comprises at least one RS resource in the first RS resource set that meets "there exists one transmission opportunity associated with the first index group".

As one embodiment, the meaning of "determination of the first RS resource group depends on the first index group" comprises: the first RS resource group comprises all RS resources in the first RS resource set that meet "there exists one transmission opportunity associated with the first index group".

As one embodiment, the first index group is one index, or the first index group comprises at least one index.

As one embodiment, the first index group is one index.

As one embodiment, the first index group comprises only one index.

As one embodiment, the first index group indicates configuration information related to the first CSI report.

As one embodiment, the first index group is used for determining at least one RS resource from the first RS resource set.

As one embodiment, the first index group indicates or identifies one spatial adaptation pattern.

As one embodiment, the first index group indicates or identifies a spatial adaptation pattern corresponding to the first CSI report.

As one embodiment, the first index group is used for determining a spatial relationship of at least one RS resource in the first RS resource set.

As one embodiment, the spatial relationship comprises spatial characteristics.

As one embodiment, the spatial relationship comprises a QCL parameter.

As one embodiment, the spatial relationship comprises an antenna port.

As one embodiment, the spatial adaptation pattern comprises at least one of an antenna port number, an antenna port index, a codebook configuration, an antenna panel number or index or identifier, an antenna array dimension parameter, a spatial adaptation pattern index or identifier, an SRS (Sounding Reference Signal) resource index, a CSI-RS resource index, an SSB index, an SS/PBCH block resource index, a CRI, an SSBRI, a TCI state, or a TCI state group.

Typically, one TCI state group comprises one or more TCI states.

As one embodiment, the first index group indicates at least one RS resource.

As one sub-embodiment of the above embodiment, the at least one RS resource indicated by the first index group comprises at least one of a CSI-RS resource or an SS/PBCH block resource.

As one sub-embodiment of the above embodiment, any RS resource indicated by the first index group is a CSI-RS resource.

As one sub-embodiment of the above embodiment, any RS resource indicated by the first index group is an SS/PBCH block resource.

As one embodiment, the first index group comprises at least one CRI.

As one embodiment, the first index group comprises at least one SSBRI.

As one embodiment, the first index group comprises at least one of at least one CRI or at least one SSBRI.

As one embodiment, the first index group comprises at least one SRS (Sounding Reference Signal) resource index.

As one embodiment, the first index group comprises at least one CSI-RS resource index.

As one embodiment, the first index group comprises at least one SSB index.

As one embodiment, the first index group comprises at least one SS/PBCH block resource index.

As one embodiment, the first index group comprises one or more of an SRS (Sounding Reference Signal) resource index, a CSI-RS resource index, or an SSB index.

As one embodiment, the first index group comprises one or more of an SRS (Sounding Reference Signal) resource index, a CSI-RS resource index, or an SS/PBCH block resource index.

As one embodiment, the first index group indicates a spatial relationship.

As one embodiment, the first index group indicates at least one TCI state.

As one embodiment, the first index group indicates one antenna port number.

As one embodiment, the first index group indicates at least one antenna port number.

As one embodiment, the first index group indicates at least one antenna port.

As one embodiment, the first index group comprises at least one antenna port index.

As one embodiment, the first index group indicates at least one antenna panel.

As one embodiment, the first index group comprises at least one antenna panel number or index or identifier.

As one embodiment, the first index group indicates at least one antenna array.

As one embodiment, the first index group indicates at least one antenna array dimension parameter.

As one embodiment, the first index group indicates at least one codebook configuration.

As one embodiment, the first index group indicates at least one codebook.

As one embodiment, the first index group comprises one spatial adaptation pattern index or identifier.

As one embodiment, at least one RS resource in the first RS resource set is associated with the first index group.

As one embodiment, at least one transmission opportunity, which is not later than the CSI reference resource for the first CSI report, of at least one RS resource in the first RS resource set is associated with the first index group.

As one embodiment, one transmission opportunity of one RS resource in the first RS resource set is associated with one index group among the N index groups, the first index group is one of the N index groups, and N is a positive integer greater than 1.

As one embodiment, the first opportunity set is associated with the first index group.

As one embodiment, each transmission opportunity comprised in the first opportunity set is associated with the first index group.

As one embodiment, the first index group is one of the N index groups, and N is a positive integer greater than 1; and any index group in the N index groups indicates at least one RS resource.

As one sub-embodiment of the above embodiment, the at least one RS resource indicated by any index group among the N index groups comprises at least one of a CSI-RS resource or an SS/PBCH block resource.

As one sub-embodiment of the above embodiment, any RS resource indicated by any index group among the N index groups is a CSI-RS resource.

As one sub-embodiment of the above embodiment, any RS resource indicated by any index group among the N index groups is an SS/PBCH block resource.

As one embodiment, the first index group is one of the N index groups, and N is a positive integer greater than 1; and any index group among the N index groups comprises at least one CRI.

As one embodiment, the first index group is one of the N index groups, and N is a positive integer greater than 1; and any index group among the N index groups comprises at least one SSBRI.

As one embodiment, the first index group is one of the N index groups, and N is a positive integer greater than 1;

and any index group among the N index groups comprises at least one of at least one CRI or at least one SSBRI.

As one embodiment, the first index group comprises at least one SRS (Sounding Reference Signal) resource index.

As one embodiment, the first index group is one of the N index groups, and N is a positive integer greater than 1; and any index group among the N index groups comprises at least one CSI-RS resource index.

As one embodiment, the first index group is one of the N index groups, and N is a positive integer greater than 1; and any index group among the N index groups comprises at least one SSB index.

As one embodiment, the first index group is one of the N index groups, and N is a positive integer greater than 1; and any index group among the N index groups comprises at least one SS/PBCH block resource index.

As one embodiment, the first index group is one of the N index groups, and N is a positive integer greater than 1; and any index group among the N index groups comprises one or more of an SRS (Sounding Reference Signal) resource index, a CSI-RS resource index, or an SSB index.

As one embodiment, the first index group is one of the N index groups, and N is a positive integer greater than 1; and any index group among the N index groups comprises one or more of an SRS (Sounding Reference Signal) resource index, a CSI-RS resource index, or an SS/PBCH block resource index.

As one embodiment, the first index group is one of the N index groups, and N is a positive integer greater than 1; and any index group among the N index groups indicates at least one TCI state.

As one embodiment, the first index group is one of the N index groups, and N is a positive integer greater than 1; and any index group among the N index groups indicates a spatial relationship.

As one embodiment, the first index group is one of the N index groups, and N is a positive integer greater than 1; and any index group among the N index groups indicates at least one antenna port number.

As one embodiment, the first index group is one of the N index groups, and N is a positive integer greater than 1; and any index group among the N index groups indicates one antenna port number.

As one embodiment, the first index group is one of the N index groups, and N is a positive integer greater than 1; and any index group among the N index groups indicates at least one antenna port.

As one embodiment, the first index group is one of the N index groups, and N is a positive integer greater than 1; and any index group among the N index groups comprises at least one antenna port index.

As one embodiment, the first index group is one of the N index groups, and N is a positive integer greater than 1; and any index group among the N index groups indicates at least one antenna panel.

As one embodiment, the first index group is one of the N index groups, and N is a positive integer greater than 1; and any index group among the N index groups comprises at least one antenna panel number or index or identifier.

As one embodiment, the first index group is one of the N index groups, and N is a positive integer greater than 1; and any index group among the N index groups indicates at least one antenna array.

As one embodiment, the first index group is one of the N index groups, and N is a positive integer greater than 1; and any index group among the N index groups indicates at least one antenna array dimension parameter.

As one embodiment, the first index group is one of the N index groups, and N is a positive integer greater than 1; and any index group in the N index groups indicates at least one codebook configuration.

As one embodiment, the first index group is one of the N index groups, and N is a positive integer greater than 1; and any index group among the N index groups indicates at least one codebook.

As one embodiment, the first index group is one of the N index groups, and N is a positive integer greater than 1; and any index group among the N index groups comprises one spatial adaptation pattern index or identifier.

As one embodiment, the meaning of "a given RS resource is associated with a given index group" comprises: the given index group indicates at least one RS resource, and the given RS resource belongs to the at least one RS resource.

As one embodiment, the meaning of "a given RS resource is associated with a given index group" comprises: the given index group indicates at least one RS resource, and an antenna port of the given RS resource and an antenna port of one RS resource in the at least one RS resource are quasi-co-located (QCL).

As one embodiment, the meaning of "a given RS resource is associated with a given index group" comprises: the given index group indicates at least one RS resource, and identical QCL parameters are used for receiving the given RS resource and one RS resource in at least one RS resource.

As one embodiment, the meaning of "a given RS resource is associated with a given index group" comprises: the given index group comprises at least one resource index, the at least one resource index is used for indicating or identifying at least one RS resource, and the given RS resource belongs to the at least one RS resource.

As one embodiment, the meaning of "a given RS resource is associated with a given index group" comprises: the given index group indicates at least one resource index, the at least one resource index is used for indicating or identifying at least one RS resource, and an antenna port of the given RS resource and an antenna port of one RS resource in the at least one RS resource are quasi-co-located (QCL).

As one embodiment, the meaning of "a given RS resource is associated with a given index group" comprises: the given index group indicates at least one resource index, the at least one resource index is used for indicating or identifying at least one RS resource, and identical QCL parameters are used for receiving the given RS resource and one RS resource in the at least one RS resource.

As one embodiment, any index in the at least one resource index is one CRI.

As one embodiment, any index in the at least one resource index is one CSI-RS resource index.

As one embodiment, any index in the at least one resource index is one SSBRI.

As one embodiment, any index in the at least one resource index is one SS/PBCH block resource index.

As one embodiment, any index in the at least one resource index is one SSB (Synchronization Signal/Physical Broadcast Channel Block) index.

As one embodiment, any index in the at least one resource index is one CRI or one SSBRI.

As one embodiment, one CRI indicates one CSI-RS resource.

As one embodiment, one SSBRI indicates one SS/PBCH block resource.

Typically, one CSI-RS resource index is used for identifying one CSI-RS resource.

Typically, one SS/PBCH block resource index is used for identifying one SS/PBCH block resource.

Typically, one SSB index is used for identifying one SS/PBCH block resource.

As one embodiment, the CSI-RS resource index is nzp-CSI-RS-ResourceId.

As one embodiment, an SS/PBCH block resource index is ssb-Index.

As one embodiment, an SSB index is ssb-Index.

As one embodiment, the meaning of "a given RS resource is associated with a given index group" comprises: the given index group indicates at least one TCI state, the at least one TCI state indicates at least one RS resource, and the given RS resource belongs to the at least one RS resource.

As one embodiment, the meaning of "a given RS resource is associated with a given index group" comprises: the given index group indicates at least one TCI state, the at least one TCI state indicates at least one RS resource, and an antenna port of the given RS resource and an antenna port of one RS resource in the at least one RS resource are quasi-co-located (QCL).

As one embodiment, the meaning of "a given RS resource is associated with a given index group" comprises: the given index group indicates at least one TCI state, the at least one TCI state indicates at least one RS resource, and identical QCL parameters are used for receiving the given RS resource and one RS resource in the at least one RS resource.

As one embodiment, the meaning of "a given RS resource is associated with a given index group" comprises: the given index group indicates a spatial relationship, and a spatial relationship of the given RS resource belongs to the spatial relationship indicated by the given index group.

As one embodiment, the meaning of "a given RS resource is associated with a given index group" comprises: the given index group indicates a spatial relationship, and the spatial relationship of the given RS resource is identical to the spatial relationship indicated by the given index group.

As one embodiment, the meaning of "a given RS resource is associated with a given index group" comprises: the given index group indicates at least one antenna port number, and an antenna port number of the given RS resource belongs to the at least one antenna port number.

As one embodiment, the meaning of "a given RS resource is associated with a given index group" comprises: the given index group indicates at least one antenna port, and the antenna port of the given RS resource belongs to the at least one antenna port.

As one embodiment, the meaning of "a given RS resource is associated with a given index group" comprises: the given index group indicates at least one antenna port, and the antenna port of the given RS resource and part of or all antenna ports in the at least one antenna port are quasi-co-located (QCL).

As one embodiment, the meaning of "a given RS resource is associated with a given index group" comprises: the given index group indicates at least one antenna port, and the antenna port of the given RS resource and part of or all antenna ports in the at least one antenna port use identical QCL parameters.

As one embodiment, the meaning of "a given RS resource is associated with a given index group" comprises: the given index group comprises at least one antenna port index, the at least one antenna port is used for identifying at least one antenna port, and the antenna port of the given RS resource belongs to the at least one antenna port.

As one embodiment, the meaning of "a given RS resource is associated with a given index group" comprises: the given index group comprises at least one antenna port index, the at least one antenna port is used for identifying at least one antenna port, and the antenna port of the given RS resource and part of or all antenna ports in the at least one antenna port are quasi-co-located (QCL).

As one embodiment, the meaning of "a given RS resource is associated with a given index group" comprises: the given index group comprises at least one antenna port index, the at least one antenna port is used for identifying at least one antenna port, and the antenna port of the given RS resource and part of or all antenna ports in the at least one antenna port use identical QCL parameters.

As one embodiment, the meaning of "a given RS resource is associated with a given index group" comprises: the given index group indicates at least one antenna panel, and an antenna panel sending the given RS resource belongs to the at least one antenna panel.

As one embodiment, the meaning of "a given RS resource is associated with a given index group" comprises: the given index group comprises at least one antenna panel number or index or identifier, the at least one antenna panel number or index or identifier is used for identifying at least one antenna panel, and an antenna panel sending the given RS resource belongs to the at least one antenna panel.

As one embodiment, the meaning of "a given RS resource is associated with a given index group" comprises: the given index group indicates at least one antenna array, and an antenna array sending the given RS resource belongs to the at least one antenna array.

As one embodiment, the meaning of "a given RS resource is associated with a given index group" comprises: the given index group indicates at least one antenna array dimension parameter, and a dimension parameter of an antenna array sending the given RS resource belongs to the at least one antenna array dimension parameter.

As one embodiment, the meaning of "a given RS resource is associated with a given index group" comprises: the given index group indicates at least one codebook configuration, and the antenna port number of the given RS resource belongs to an antenna port number comprised in the at least one codebook configuration.

As one embodiment, the meaning of "a given RS resource is associated with a given index group" comprises: the given index group indicates at least one codebook, and the antenna port number of the given RS resource belongs to an antenna port number of the at least one codebook.

As one embodiment, the meaning of "a given RS resource is associated with a given index group" comprises: the given index group indicates one spatial adaptation pattern, and the given RS resource belongs to the one spatial adaptation pattern.

As one embodiment, the meaning of "a given RS resource is associated with a given index group" comprises: the given index group comprises one spatial adaptation pattern index or identifier, the one spatial adaptation pattern index or identifier is used for identifying one spatial adaptation pattern, and the given RS resource belongs to the one spatial adaptation pattern.

As one embodiment, the given RS resource is one RS resource in the first RS resource set, and the given index group is one of the N index groups.

As one embodiment, the given RS resource is one RS resource in the first RS resource set, and the given index group is the first index group.

As one embodiment, the given RS resource is any RS resource in the first RS resource group, and the given index group is the first index group.

As one embodiment, the given RS resource is the first RS resource, and the given index group is the first index group.

As one embodiment, at any moment, only one index group among the N index groups is valid.

As one embodiment, the meaning of "a given transmission opportunity is associated with a given index group" comprises: the given transmission opportunity is one transmission opportunity of a given RS resource, and the given transmission opportunity is within a valid time of the given index group.

As one embodiment, the meaning of "a given transmission opportunity is associated with a given index group" comprises: the given transmission opportunity is one transmission opportunity of a given RS resource, and the given RS resource is associated with the given index group.

As one embodiment, the meaning of "a given transmission opportunity is associated with a given index group" comprises: the given transmission opportunity is one transmission opportunity of a given RS resource, the given RS resource is associated with the given index group, and the given transmission opportunity is within a valid time of the given index group.

As one embodiment, the meaning of "a given transmission opportunity is associated with a given index group" comprises: the given transmission opportunity is one transmission opportunity of the given RS resource, the given index group indicates at least one RS resource, and a sending antenna port of the given transmission opportunity and an antenna port of one RS resource in the at least one RS resource are quasi-co-located (QCL).

As one embodiment, the meaning of "a given transmission opportunity is associated with a given index group" comprises: the given transmission opportunity is one transmission opportunity of the given RS resource, the given index group indicates at least one RS resource, and identical QCL parameters are used for receiving the given transmission opportunity and one RS resource in the at least one RS resource.

As one embodiment, the meaning of "a given transmission opportunity is associated with a given index group" comprises: the given transmission opportunity is one transmission opportunity of the given RS resource, the given index group indicates at least one resource index, the at least one resource index is used for indicating or identifying at least one RS resource, and the sending antenna port of the given transmission opportunity and the antenna port of one RS resource in the at least one RS resource are quasi-co-located (QCL).

As one embodiment, the meaning of "a given transmission opportunity is associated with a given index group" comprises: the given transmission opportunity is one transmission opportunity of the given RS resource, the given index group indicates at least one resource index, the at least one resource index is used for indicating or identifying at least one RS resource, and identical QCL parameters are used for receiving the given transmission opportunity and one RS resource in the at least one RS resource.

As one embodiment, the meaning of "a given transmission opportunity is associated with a given index group" comprises: the given transmission opportunity is one transmission opportunity of the given RS resource, the given index group indicates at least one TCI state, the at least one TCI state indicates at least one RS resource, and the sending antenna port of the given transmission opportunity and the antenna port of one RS resource in the at least one RS resource are quasi-co-located (QCL).

As one embodiment, the meaning of "a given transmission opportunity is associated with a given index group" comprises: the given transmission opportunity is one transmission opportunity of the given RS resource, the given index group indicates at least one TCI state, the at least one TCI state indicates at least one RS resource, and identical QCL parameters are used for receiving the given transmission opportunity and one RS resource in the at least one RS resource.

As one embodiment, the meaning of "a given transmission opportunity is associated with a given index group" comprises: the given transmission opportunity is one transmission opportunity of the given RS resource, the given index group indicates a spatial relationship, and a spatial relationship of the given transmission opportunity belongs to the spatial relationship indicated by the given index group.

As one embodiment, the meaning of "a given transmission opportunity is associated with a given index group" comprises: the given transmission opportunity is one transmission opportunity of the given RS resource, the given index group indicates a spatial relationship, and the spatial relationship of the given transmission opportunity is identical to the spatial relationship indicated by the given index group.

As one embodiment, the meaning of "a given transmission opportunity is associated with a given index group" comprises: the given transmission opportunity is one transmission opportunity of the given RS resource, the given index group indicates at least one antenna port number, and a sending antenna port number of the given transmission opportunity belongs to the at least one antenna port number.

As one embodiment, the meaning of "a given transmission opportunity is associated with a given index group" comprises: the given transmission opportunity is one transmission opportunity of the given RS resource, the given index group indicates at least one antenna port, and the sending antenna port of the given transmission opportunity belongs to the at least one antenna port.

As one embodiment, the meaning of "a given transmission opportunity is associated with a given index group" comprises: the given transmission opportunity is one transmission opportunity of the given RS resource, the given index group indicates at least one antenna port, and the sending antenna port of the given transmission opportunity and part of or all antenna ports in the at least one antenna port are quasi-co-located (QCL).

As one embodiment, the meaning of "a given transmission opportunity is associated with a given index group" comprises: the given transmission opportunity is one transmission opportunity of the given RS resource, the given index group indicates at least one antenna port, and the sending antenna port of the given transmission opportunity and part of or all antenna ports in the at least one antenna port use identical QCL parameters.

As one embodiment, the meaning of "a given transmission opportunity is associated with a given index group" comprises: the given transmission opportunity is one transmission opportunity of the given RS resource, the given index group comprises at least one antenna port index, the at least one antenna port is used for identifying at least one antenna port, and the sending antenna port of the given transmission opportunity belongs to the at least one antenna port.

As one embodiment, the meaning of "a given transmission opportunity is associated with a given index group" comprises: the given transmission opportunity is one transmission opportunity of the given RS resource, the given index group comprises at least one antenna port index, the at least one antenna port is used for identifying at least one antenna port, and the sending antenna port of the given transmission opportunity and part of or all antenna ports in the at least one antenna port are quasi-co-located (QCL).

As one embodiment, the meaning of "a given transmission opportunity is associated with a given index group" comprises: the given transmission opportunity is one transmission opportunity of the given RS resource, the given index group comprises at least one antenna port index, the at least one antenna port is used for identifying at least one antenna port, and the sending antenna port of the given transmission opportunity and part of or all antenna ports in the at least one antenna port use identical QCL parameters.

As one embodiment, the meaning of "a given transmission opportunity is associated with a given index group" comprises: the given transmission opportunity is one transmission opportunity of the given RS resource, the given index group indicates at least one antenna panel, and the sending antenna panel of the given transmission opportunity belongs to the at least one antenna panel.

As one embodiment, the meaning of "a given transmission opportunity is associated with a given index group" comprises: the given transmission opportunity is one transmission opportunity of the given RS resource, the given index group comprises at least one antenna panel number or index or identifier, the at least one antenna panel number or index or identifier is used for identifying at least one antenna panel, and a sending antenna panel of the given transmission opportunity belongs to the at least one antenna panel.

As one embodiment, the meaning of "a given transmission opportunity is associated with a given index group" comprises: the given transmission opportunity is one transmission opportunity of the given RS resource, the given index group indicates at least one antenna array, and a sending antenna array of the given transmission opportunity belongs to the at least one antenna array.

As one embodiment, the meaning of "a given transmission opportunity is associated with a given index group" comprises: the given transmission opportunity is one transmission opportunity of the given RS resource, the given index group indicates at least one antenna array dimension parameter, and a dimension parameter of the sending antenna array of the given transmission opportunity belongs to the at least one antenna array dimension parameter.

As one embodiment, the meaning of "a given transmission opportunity is associated with a given index group" comprises: the given transmission opportunity is one transmission opportunity of the given RS resource, the given index group indicates at least one codebook configuration, and the sending antenna port number of the given transmission opportunity belongs to the antenna port number comprised in the at least one codebook configuration.

As one embodiment, the meaning of "a given transmission opportunity is associated with a given index group" comprises: the given transmission opportunity is one transmission opportunity of the given RS resource, the given index group indicates at least one codebook, and the sending antenna port number of the given transmission opportunity belongs to the antenna port number of the at least one codebook.

As one embodiment, the meaning of "a given transmission opportunity is associated with a given index group" comprises: the given transmission opportunity is one transmission opportunity of the given RS resource, the given index group indicates one spatial adaptation pattern, and the given transmission opportunity belongs to a valid time of the one spatial adaptation pattern.

As one embodiment, the meaning of "a given transmission opportunity is associated with a given index group" comprises: the given transmission opportunity is one transmission opportunity of the given RS resource, the given index group comprises one spatial adaptation pattern index or identifier, the one spatial adaptation pattern index or identifier is used for identifying one spatial adaptation pattern, and the given transmission opportunity belongs to a valid time of the one spatial adaptation pattern.

As one embodiment, the given transmission opportunity is one transmission opportunity of one RS resource in the first RS resource set, and the given index group is one of the N index groups.

As one embodiment, the given transmission opportunity is one transmission opportunity of one RS resource in the first RS resource set, and the given index group is the first index group.

As one embodiment, the given transmission opportunity is any transmission opportunity of any RS resource in the first RS resource group, and the given index group is the first index group.

As one embodiment, the given transmission opportunity is one transmission opportunity of one RS resource in the first RS resource group, and the given index group is the first index group.

As one embodiment, the given transmission opportunity is one transmission opportunity of the first RS resource, and the given index group is the first index group.

As one embodiment, the given transmission opportunity is one transmission opportunity in the first opportunity set, and the given index group is the first index group.

As one embodiment, the meaning of "two antenna ports are quasi-co-located" comprises: the two antenna ports have identical QCL parameters.

As one embodiment, the meaning of "two antenna ports are quasi-co-located" comprises: the two antenna ports have identical QCL parameters of a TypeD.

As one embodiment, the meaning of "two antenna ports are quasi-co-located" comprises: the two antenna ports have identical spatial Rx parameters.

As one embodiment, the meaning of "two antenna ports are not quasi-co-located" comprises: the two antenna ports have different QCL parameters.

As one embodiment, the meaning of "two antenna ports are not quasi-co-located" comprises: the two antenna ports have different QCL parameters of the TypeD.

As one embodiment, the meaning of "two antenna ports are not quasi-co-located" comprises: the two antenna ports have different spatial Rx parameters.

As one embodiment, types of the QCL parameter comprise a TypeA, a TypeB, a TypeC, and the TypeD.

As one embodiment, QCL parameters of the TypeA comprise Doppler shift, Doppler spread, average delay, and delay spread.

As one embodiment, QCL parameters of the TypeB comprise Doppler shift and Doppler spread.

As one embodiment, QCL parameters of the TypeC comprise Doppler shift and average delay.

As one embodiment, QCL parameters of the TypeD comprise a Spatial Rx parameter.

As one embodiment, specific definitions of the TypeA, the TypeB, the TypeC, and the TypeD refer to Chapter 5.1.5 of 3GPP TS38.214.

As one embodiment, the QCL parameters comprise one or more of delay spread, Doppler spread, Doppler shift, average delay, or a Spatial Rx parameter.

As one embodiment, the QCL parameters comprise Doppler shift and Doppler spread.

As one embodiment, the QCL parameters comprise Doppler shift and average delay.

As one embodiment, the QCL parameters comprise a Spatial Rx parameter.

As one embodiment, the QCL parameters comprise at least one of a spatial Tx parameter or a spatial Rx parameter.

As one embodiment, the QCL parameters comprise a spatial domain receive filter.

As one embodiment, the QCL parameters comprise a spatial domain filter.

As one embodiment, the QCL parameters comprise at least one of a spatial domain transmit filter or the spatial domain receive filter.

As one embodiment, one TCI (Transmission configuration indication) state indicates one quasi co-location relationship.

As one embodiment, one TCI state indicates one or more RS resources.

As one embodiment, one TCI state indicates at least one RS resource.

As one embodiment, any RS resource indicated by one TCI state is one of an SRS resource, a CSI-RS resource, or an SS/PBCH block resource.

As one embodiment, any RS resource indicated by one TCI state is a CSI-RS resource or an SS/PBCH block resource.

As one embodiment, one TCI state indicates at least one RS resource and a QCL (Quasi-Co-Location) parameter corresponding to each RS resource in the at least one RS resource.

As one embodiment, one TCI state indicates at least one RS resource and a type of a QCL parameter corresponding to each RS resource in the at least one RS resource.

As one embodiment, specific definitions of a TCI state and a quasi co-location (QCL) refer to Chapter 5.1.5 of 3GPP TS38.214.

As one embodiment, the first index group depends on the first opportunity set.

As one embodiment, the meaning of "the first index group depends on the first opportunity set" comprises: the first opportunity set comprises at least one transmission opportunity of at least one RS resource, and the first index group is one index group among the N index groups that is associated with the at least one RS resource.

As one embodiment, the meaning of "the first index group depends on the first opportunity set" comprises: the first opportunity set comprises at least one transmission opportunity of at least one RS resource, and the first index group is one index group among the N index groups that is associated with one RS resource in the at least one RS resource.

As one embodiment, the meaning of "the first index group depends on the first opportunity set" comprises: the first opportunity set comprises at least one transmission opportunity of the first RS resource, and the first index group is one index group among the N index groups that is associated with the first RS resource.

As one embodiment, the meaning of "the first index group depends on the first opportunity set" comprises: the first opportunity set is associated with one index group among the N index groups, the first index group is one index group among the N index groups that is associated with the first opportunity set, and N is a positive integer greater than 1.

As one embodiment, the meaning of "the first index group depends on the first opportunity set" comprises: the first opportunity set is associated with at least one index group among the N index groups, the first index group is one index group in the at least one index group, and N is a positive integer greater than 1.

As one embodiment, "one index group associated with the first opportunity set" is one index group associated with any transmission opportunity in the first opportunity set.

As one embodiment, "one index group associated with the first opportunity set" is one index group associated with one transmission opportunity in the first opportunity set.

As one embodiment, the first opportunity set depends on the first index group.

As one embodiment, the meaning of "the first opportunity set depends on the first index group" comprises: the first opportunity set comprises at least one transmission opportunity of at least one RS resource in the first RS resource set that is associated with the first index group.

As one embodiment, the meaning of "the first opportunity set depends on the first index group" comprises: the first opportunity set comprises at least one transmission opportunity, which is associated with the first index group, of at least one RS resource in the first RS resource set.

## Embodiment 2

Embodiment 2 illustrates a schematic diagram of a network architecture according to one embodiment of the present application, as shown in FIG. 2.

FIG. 2 explains a network architecture 200 of LTE (Long-Term Evolution), LTE-A (Long-Term Evolution Advanced), and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with the UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but for simplicity, these entities/interfaces are not shown. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B(gNB)203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base station transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function)211, other MME/AMF/SMF214, an S-GW (Service Gateway)/UPF (User Plane Function) 212, and a P-GW (Packet Data Network Gateway)/UPF213. The MME/AMF/SMF211 is a control node that processes signalings between the UE201 and the 5GC/EPC210. Generally, the MME/AMF/SMF211 provides bearer and connection management. All user IP (Internet Protocol) packets are transmitted by the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, a first node in the present application comprises the UE201.

As one embodiment, the first node in the present application comprises the UE241.

As one embodiment, a second node in the present application comprises the gNB203.

As one embodiment, the UE201 supports Energy Saving on a base station side.

As one embodiment, the gNB203 supports Energy Saving on a base station side.

## Embodiment 3

Embodiment 3 illustrates a schematic diagram of an embodiment of a wireless protocol architecture for a user plane and a control plane according to one embodiment of the present application, as shown in FIG. 3.

Embodiment 3 shows a schematic diagram of an embodiment of one wireless protocol architecture for a user plane and a control plane according to the present application, as shown in FIG. 3. FIG. 3 is a schematic diagram explaining an embodiment of a radio protocol architecture for a user plane 350 and a control plane 300. FIG. 3 shows the radio protocol architecture of the control plane 300 used between a first communication node device (UE, a gNB, or an RSU in V2X) and a second communication node device (a gNB, UE, or an RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301, and is responsible for a link between the first communication node device and the second communication node device or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using an RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to a first node in the present application.

As one embodiment, the wireless protocol architecture in FIG. 3 is applicable to a second node in the present application.

As one embodiment, a first CSI report configuration is generated in the RRC sublayer 306.

As one embodiment, the first CSI report is generated in the PHY301.

As one embodiment, the first CSI report is generated in a PHY351.

## Embodiment 4

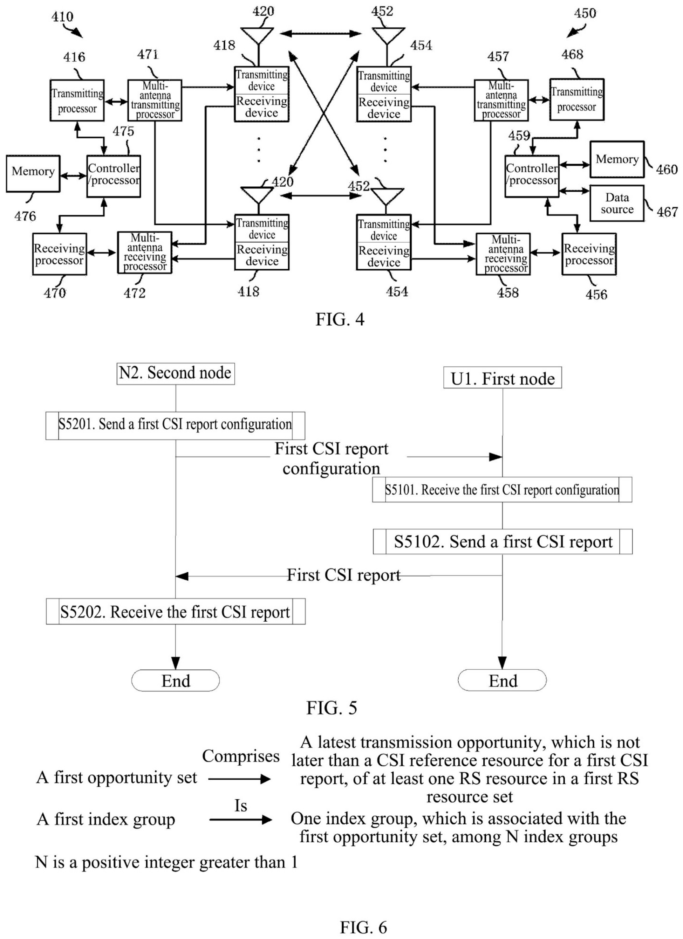

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper layer data packets from a core network are provided to the controller/processor 475. The controller/processor 475 implements the functionality of an L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for an HARQ operation and retransmission of a lost packet, and for signalings to the second communication device 450. The transmitting processor 416 and the multi-antenna transmitting processor 471 implement various signal processing functions for an L1 layer (i.e., a physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time-domain multi-carrier symbol stream. The multi-antenna transmitting processor 471 then performs sending analog precoding/-beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operations. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any parallel stream destined for the second communication device 450. Symbols on each parallel stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the DL (DownLink), the controller/processor 459 provides demultiplexing between transport and logical channels, packet reassembly, decryption, header decompression, and control signal processing to recover the upper-layer data packets from the core network. The upper layer data packets are then provided to all protocol layers above the L2 layer. Various control signals may also be provided to an L3 for L3 processing. The controller/processor 459 is also responsible for error detection using an acknowledgement (ACK) and/or negative acknowledgement (NACK) protocol to support HARQ operations.

In a transmission from the second communication device 450 to the first communication device 410, at the second communication device 450, the data source 467 is used for providing the upper layer data packets to the controller/processor 459. The data source 467 represents all protocol layers above the L2 layer. Similar to a sending function at the first communication device 410 described in the DL, the controller/processor 459 implements header compression, encryption, packet segmentation and reordering, and multiplexing between logical and transport channels based on the radio resource allocation of the first communication device 410, and implements functions of the L2 layer for the user plane and the control plane. The controller/processor 459 is also responsible for an HARQ operation and retransmission of a lost packet, and for signalings to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. The controller/processor 475 provides demultiplexing between transport and logical channels, packet reassembly, decryption, header decompression, and control signal processing to recover upper-layer data packets from the second communication device 450. The upper layer data packets from the controller/processor 475 can be provided to the core network. The controller/processor 475 is also responsible for error detection using the ACK and/or NACK protocol to support the HARQ operation.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives a first CSI report configuration, the first CSI report configuration indicating a first RS resource set, and the first RS resource set comprising one or more RS resources; and sends a first CSI report, wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set, or the first opportunity set depends on the first index group.

As one embodiment, the second communication device 450 comprises: a memory storing a computer readable instruction program, the computer readable instruction program generating actions when executed by at least one processor, and the actions comprising: receiving the first CSI report configuration, the first CSI report configuration indicating the first RS resource set, and the first RS resource set comprising one or more RS resources; and sending the first CSI report, wherein the first opportunity set comprises at least one transmission opportunity, which is not later than the CSI reference resource for the first CSI report, of at least one RS resource in the first RS resource set, and the first opportunity set is used for obtaining a channel measurement for calculating the first CSI report; the first CSI report corresponds to the first index group; the first index group comprises at least one index; and the first index group depends on the first opportunity set, or the first opportunity set depends on the first index group.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: sends the first CSI report configuration, the first CSI report configuration indicating the first RS resource set, and the first RS resource set comprising one or more RS resources; and receives the first CSI report, wherein the first opportunity set comprises at least one transmission opportunity, which is not later than the CSI reference resource for the first CSI report, of at least one RS resource in the first RS resource set, and the first opportunity set is used for obtaining a channel measurement for calculating the first CSI report; the first CSI report corresponds to the first index group; the first index group comprises at least one index; and the first index group depends on the first opportunity set, or the first opportunity set depends on the first index group.

As one embodiment, the first communication device 410 comprises: a memory storing a computer readable instruction program, the computer readable instruction program generating actions when executed by at least one processor, and the actions comprising: sending the first CSI report configuration, the first CSI report configuration indicating the first RS resource set, and the first RS resource set comprising one or more RS resources; and receiving the first CSI report, wherein the first opportunity set comprises at least one transmission opportunity, which is not later than the CSI reference resource for the first CSI report, of at least one RS resource in the first RS resource set, and the first opportunity set is used for obtaining a channel measurement for calculating the first CSI report; the first CSI report corresponds to the first index group; the first index group comprises at least one index; and the first index group depends on the first opportunity set, or the first opportunity set depends on the first index group.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first CSI report configuration in the present application; and at least one of {the antenna 420, the transmitting device 418, the transmitting processor 416, the multi-antenna transmitting processor 471, the controller/processor 475, and the memory 476} is used for sending the first CSI report configuration in the present application.

As one embodiment, at least one of {the antenna 452, the transmitting device 454, the transmitting processor 468, the multi-antenna transmitting processor 457, the controller/processor 459, and the memory 460} is used for sending the first CSI report in the present application; and at least one of {the antenna 420, the receiving device 418, the receiving processor 470, the multi-antenna receiving processor 472, the controller/processor 475, and the memory 476} is used for receiving the first CSI report in the present application.

**Embodiment 5**

Embodiment 5 illustrates a flowchart of wireless transmission according to one embodiment of the present application, as shown in FIG. 5. In FIG. 5, a first node U1 and a second node N2 are two communication nodes transmitted through an air interface, respectively.

For **the first node U1**, in step S5101, a first CSI report configuration is received; and in step S5102, a first CSI report is sent.

For **the second node N2**, in step S5201, the first CSI report configuration is sent; and in step S5202, the first CSI report is received.

In Embodiment 5, the first CSI report configuration indicates a first RS resource set, and the first RS resource set comprises one or more RS resources; a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set, or the first opportunity set depends on the first index group.

As one embodiment, the first node U1 is a first node in the present application.

As one embodiment, the second node N2 is a second node in the present application.

As one embodiment, an air interface between the second node N2 and the first node U1 comprises a wireless interface between a base station device and user equipment.

As one embodiment, the air interface between the second node N2 and the first node U1 comprises a wireless interface between a relay node device and user equipment.

As one embodiment, the air interface between the second node N2 and the first node U1 comprises a wireless interface between user equipment and user equipment.

As one embodiment, the first CSI report configuration is transmitted in a PDSCH (Physical downlink shared channel).

As one embodiment, the first CSI report is transmitted in a PUSCH (Physical Uplink Shared Channel).

As one embodiment, the first CSI report is transmitted in a PUCCH (Physical Uplink Control Channel).

As one embodiment, the first CSI report is periodic or semi-persistent.

As one embodiment, the first CSI report is activated or deactivated by one MAC CE.

As one embodiment, a name of a MAC CE that activates the first CSI report comprises SP CSI reporting on PUCCH Activation MAC CE.

As one embodiment, a name of a MAC CE that deactivates the first CSI report comprises SP CSI reporting on PUCCH Deactivation MAC CE.

As one embodiment, the first CSI report is triggered by one piece of DCI, the one piece of DCI comprises a CSI request field, the CSI request field of the one piece of DCI is used for indicating one trigger state, and the trigger state is used for sending the first CSI report by the first node U1.

As one embodiment, the first CSI report is semi-persistent, and when the first node U1 receives one activation command, the first node U1 sends the first CSI report on a PUCCH.

As one embodiment, the one activation command comprises SP CSI reporting on PUCCH Activation MAC CE.

As one embodiment, the first CSI report is semi-persistent, and when the first node U1 is triggered by the one piece of DCI, the first node U1 sends the first CSI report on a PUSCH.

As one embodiment, at least one RS resource in the first RS resource set is used in an energy saving mode of the second node N2.

As one embodiment, the at least one RS resource in the first RS resource set is used in an energy saving mode of a cell.

As one embodiment, the first CSI report is aperiodic, and when the first node U1 is triggered by the one piece of DCI, the first node U1 sends the first CSI report on a PUSCH.

**Embodiment 6**

Embodiment 6 illustrates a schematic diagram of a first index group depending on a first opportunity set according to one embodiment of the present application, as shown in FIG. 6.

In Embodiment 6, the first opportunity set comprises a latest transmission opportunity, which is not later than a CSI reference resource for a first CSI report, of at least one RS resource in a first RS resource set, the first index group is one index group among N index groups that is associated with the first opportunity set, and N is a positive integer greater than 1.

As one embodiment, any transmission opportunity in the first opportunity set is associated with the first index group.

As one embodiment, any transmission opportunity in the first opportunity set is associated with the same index group among the N index groups.

As one embodiment, the meaning of "a first opportunity set comprises a latest transmission opportunity, which is not later than a CSI reference resource for a first CSI report, of at least one RS resource in a first RS resource set" means: the first opportunity set comprises a latest transmission opportunity, which is not later than the CSI reference resource for the first CSI report, of one RS resource in the first RS resource set.

As one embodiment, the meaning of "a first opportunity set comprises a latest transmission opportunity, which is not later than a CSI reference resource for a first CSI report, of at least one RS resource in a first RS resource set" means: the first CSI report comprises a first resource indication, the first resource indication indicates a first RS resource, and the first RS resource is one RS resource in the first RS resource set; and the first opportunity set comprises a latest transmission opportunity, which is not later than the CSI reference resource for the first CSI report, of the first RS resource.

As one embodiment, the meaning of "a first opportunity set comprises a latest transmission opportunity, which is not later than a CSI reference resource for a first CSI report, of at least one RS resource in a first RS resource set" means: the first opportunity set comprises a latest transmission opportunity, which is not later than the CSI reference resource for the first CSI report, of each RS resource in the first RS resource set.

As one embodiment, the meaning of "a first opportunity set comprises a latest transmission opportunity, which is not later than a CSI reference resource for a first CSI report, of at least one RS resource in a first RS resource set" means:

the first opportunity set comprises a latest transmission opportunity, which is not later than the CSI reference resource for the first CSI report, of each RS resource in part of RS resources in the first RS resource set.

As one embodiment, the meaning of "a first opportunity set comprises a latest transmission opportunity, which is not later than a CSI reference resource for a first CSI report, of at least one RS resource in a first RS resource set" means: a first RS resource group is composed of at least one RS resource in the first RS resource set, and the first opportunity set comprises a latest transmission opportunity, which is not later than the CSI reference resource for the first CSI report, of each RS resource in the first RS resource group.

As one embodiment, the meaning of "a first opportunity set comprises a latest transmission opportunity, which is not later than a CSI reference resource for a first CSI report, of at least one RS resource in a first RS resource set" means: the first RS resource group is composed of at least one RS resource in the first RS resource set, and the first opportunity set comprises a latest transmission opportunity, which is not later than the CSI reference resource for the first CSI report, of each RS resource in at least one RS resource in the first RS resource group.

## Embodiment 7

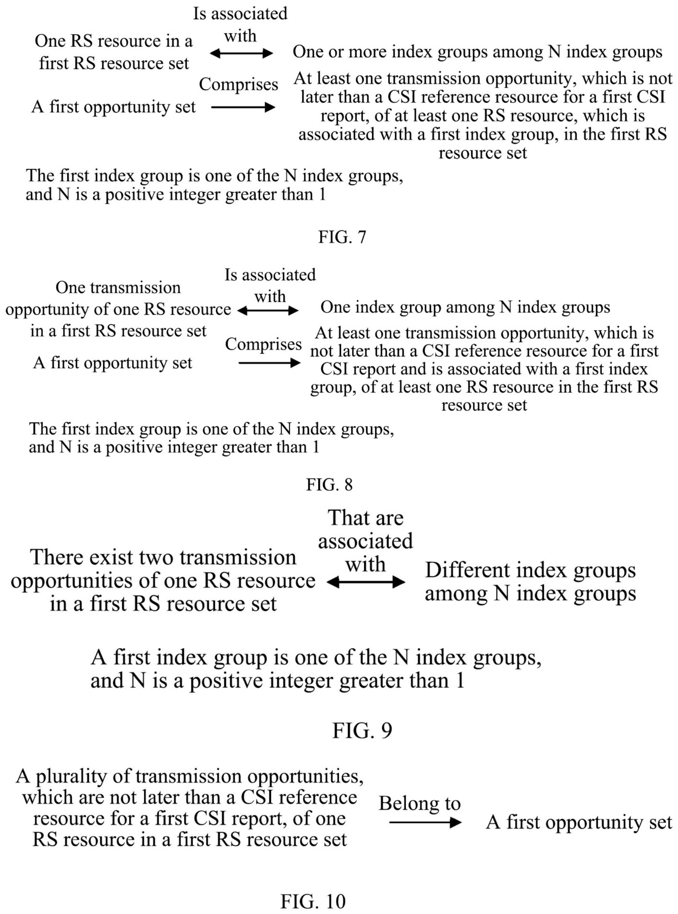

Embodiment 7 illustrates a schematic diagram of a first opportunity set depending on a first index group according to one embodiment of the present application, as shown in FIG. 7.

In Embodiment 7, one RS resource in a first RS resource set is associated with one or more index groups among N index groups, the first index group is one of the N index groups, and N is a positive integer greater than 1; and the first opportunity set comprises at least one transmission opportunity, which is not later than a CSI reference resource for a first CSI report, of at least one RS resource in the first RS resource set that is associated with the first index group.

As one embodiment, any RS resource in the first RS resource set is associated with only one index group among the N index groups.

As one embodiment, any RS resource in the first RS resource set is associated with one or more index groups among the N index groups.

As one embodiment, there exist two RS resources in the first RS resource set that are respectively associated with different index groups among the N index groups.

As one embodiment, which index group or index groups among the N index groups one RS resource in the first RS resource set is associated with is indicated by higher layer parameters.

As one embodiment, which index group or index groups among the N index groups one RS resource in the first RS resource set is associated with is indicated by RRC parameters.

As one embodiment, which index group or index groups among the N index groups one RS resource in the first RS resource set is associated with is indicated by a MAC CE signaling.

As one embodiment, which index group or index groups among the N index groups one RS resource in the first RS resource set is associated with is indicated by a physical layer signaling.

As one embodiment, which index group or index groups among the N index groups one RS resource in the first RS resource set is associated with is indicated by a DCI signaling.

As one embodiment, a first CSI report configuration also indicates which index group or index groups among the N index groups one RS resource in the first RS resource set is associated with.

As one embodiment, the first CSI report configuration comprises a first CSI resource configuration, the first CSI resource configuration indicates the first RS resource set, and the first CSI resource configuration also indicates which index group or index groups among the N index groups one RS resource in the first RS resource set is associated with.

As one embodiment, the meaning of "the first opportunity set comprises at least one transmission opportunity, which is not later than a CSI reference resource for a first CSI report, of at least one RS resource in the first RS resource set that is associated with the first index group" means: the first opportunity set comprises at least one transmission opportunity, which is not later than the CSI reference resource for the first CSI report, of one RS resource in the first RS resource set that is associated with the first index group.

As one embodiment, the meaning of "the first opportunity set comprises at least one transmission opportunity, which is not later than a CSI reference resource for a first CSI report, of at least one RS resource in the first RS resource set that is associated with the first index group" means: the first CSI report comprises a first resource indication, the first resource indication indicates a first RS resource, the first RS resource is one RS resource in the first RS resource set, and the first RS resource is associated with the first index group; and the first opportunity set comprises one transmission opportunity, which is not later than the CSI reference resource for the first CSI report, of the first RS resource.

As one embodiment, the meaning of "the first opportunity set comprises at least one transmission opportunity, which is not later than a CSI reference resource for a first CSI report, of at least one RS resource in the first RS resource set that is associated with the first index group" means: the first CSI report comprises the first resource indication, the first resource indication indicates the first RS resource, the first RS resource is one RS resource in the first RS resource set, and the first RS resource is associated with the first index group; and the first opportunity set comprises a plurality of transmission opportunities, which are not later than the CSI reference resource for the first CSI report, of the first RS resource.

As one embodiment, the meaning of "the first opportunity set comprises at least one transmission opportunity, which is not later than a CSI reference resource for a first CSI report, of at least one RS resource in the first RS resource set that is associated with the first index group" means: the first opportunity set comprises at least one transmission opportunity, which is not later than the CSI reference resource for the first CSI report, of each RS resource in the first RS resource set that is associated with the first index group.

As one embodiment, the meaning of "the first opportunity set comprises at least one transmission opportunity, which is not later than a CSI reference resource for a first CSI report, of at least one RS resource in the first RS resource set that is associated with the first index group" means: a first RS resource group is composed of at least one RS resource in the first RS resource set that is associated with the first index group, and the first opportunity set comprises at least one transmission opportunity, which is not later than the CSI reference resource for the first CSI report, of each RS resource in the first RS resource group.

As one embodiment, the meaning of "the first opportunity set comprises at least one transmission opportunity, which is not later than a CSI reference resource for a first CSI report, of at least one RS resource in the first RS resource set that is associated with the first index group" means: the first RS resource group is composed of at least one RS resource in the first RS resource set that is associated with the first index group, and the first opportunity set comprises one transmission opportunity, which is not later than the CSI reference resource for the first CSI report, of each RS resource in the first RS resource group.

As one embodiment, the meaning of "the first opportunity set comprises at least one transmission opportunity, which is not later than a CSI reference resource for a first CSI report, of at least one RS resource in the first RS resource set that is associated with the first index group" means: the first RS resource group is composed of at least one RS resource in the first RS resource set that is associated with the first index group, and the first opportunity set comprises at least one transmission opportunity, which is not later than the CSI reference resource for the first CSI report, of each RS resource in at least one RS resource in the first RS resource group.

As one embodiment, the meaning of "the first opportunity set comprises at least one transmission opportunity, which is not later than a CSI reference resource for a first CSI report, of at least one RS resource in the first RS resource set that is associated with the first index group" means: the first RS resource group is composed of at least one RS resource in the first RS resource set that is associated with the first index group, and the first opportunity set comprises one transmission opportunity, which is not later than the CSI reference resource for the first CSI report, of each RS resource in at least one RS resource in the first RS resource group.

## Embodiment 8

Embodiment 8 illustrates a schematic diagram of a first opportunity set depending on a first index group according to another embodiment of the present application, as shown in FIG. 8.

In Embodiment 8, one transmission opportunity of one RS resource in a first RS resource set is associated with one index group among N index groups, the first index group is one of the N index groups, and N is a positive integer greater than 1; and the first opportunity set comprises at least one transmission opportunity, which is not later than a CSI reference resource for a first CSI report and is associated with the first index group, of at least one RS resource in the first RS resource set.

As one embodiment, any transmission opportunity of one RS resource in the first RS resource set is associated with one index group among the N index groups.

As one embodiment, there exist only part of transmission opportunities of one RS resource in the first RS resource set that are associated with index groups among the N index groups.

As one embodiment, the meaning of "the first opportunity set comprises at least one transmission opportunity, which is not later than a CSI reference resource for a first CSI report and is associated with the first index group, of at least one RS resource in the first RS resource set" means: the first opportunity set comprises one transmission opportunity, which is not later than the CSI reference resource for the first CSI report and is associated with the first index group, of one RS resource in the first RS resource set.

As one embodiment, the meaning of "the first opportunity set comprises at least one transmission opportunity, which is not later than a CSI reference resource for a first CSI report and is associated with the first index group, of at least one RS resource in the first RS resource set" means: the first opportunity set comprises a plurality of transmission opportunities, which are not later than the CSI reference resource for the first CSI report and are associated with the first index group, of one RS resource in the first RS resource set.

As one embodiment, the meaning of "the first opportunity set comprises at least one transmission opportunity, which is not later than a CSI reference resource for a first CSI report and is associated with the first index group, of at least one RS resource in the first RS resource set" means: the first CSI report comprises a first resource indication, the first resource indication indicates a first RS resource, and the first RS resource is one RS resource in the first RS resource set; and the first opportunity set comprises one transmission opportunity, which is not later than the CSI reference resource for the first CSI report and is associated with the first index group, of the first RS resource.

As one embodiment, the meaning of "the first opportunity set comprises at least one transmission opportunity, which is not later than a CSI reference resource for a first CSI report, of at least one RS resource in the first RS resource set" means: the first CSI report comprises the first resource indication, the first resource indication indicates the first RS resource, and the first RS resource is one RS resource in the first RS resource set; and the first opportunity set comprises a plurality of transmission opportunities, which are not later than the CSI reference resource for the first CSI report and are associated with the first index group, of the first RS resource.

As one embodiment, the meaning of "the first opportunity set comprises at least one transmission opportunity, which is not later than a CSI reference resource for a first CSI report and is associated with the first index group, of at least one RS resource in the first RS resource set" means: the first opportunity set comprises at least one transmission opportunity, which is not later than the CSI reference resource for the first CSI report and is associated with the first index group, of each RS resource in at least one RS resource in the first RS resource set.

As one embodiment, the meaning of "the first opportunity set comprises at least one transmission opportunity, which is not later than a CSI reference resource for a first CSI report and is associated with the first index group, of at least one RS resource in the first RS resource set" means: a first RS resource group is composed of at least one RS resource in the first RS resource set, and the first opportunity set comprises at least one transmission opportunity, which is not later than the CSI reference resource for the first CSI report and is associated with the first index group, of each RS resource in the first RS resource group.

As one embodiment, the meaning of "the first opportunity set comprises at least one transmission opportunity, which is not later than a CSI reference resource for a first CSI report and is associated with the first index group, of at least one RS resource in the first RS resource set" means: the first RS resource group is composed of at least one RS resource in the first RS resource set, and the first opportunity set comprises one transmission opportunity, which is not later than the CSI reference resource for the first CSI report and is associated with the first index group, of each RS resource in the first RS resource group.

As one embodiment, the meaning of "the first opportunity set comprises at least one transmission opportunity, which is not later than a CSI reference resource for a first CSI report and is associated with the first index group, of at least one RS resource in the first RS resource set" means: the first RS resource group is composed of at least one RS resource in the first RS resource set, and the first opportunity set comprises at least one transmission opportunity, which is not later than the CSI reference resource for the first CSI report and is associated with the first index group, of each RS resource in at least one RS resource in the first RS resource group.

As one embodiment, the meaning of "the first opportunity set comprises at least one transmission opportunity, which is not later than a CSI reference resource for a first CSI report and is associated with the first index group, of at least one RS resource in the first RS resource set" means: the first RS resource group is composed of at least one RS resource in the first RS resource set, and the first opportunity set comprises one transmission opportunity, which is not later than the CSI reference resource for the first CSI report and is associated with the first index group, of each RS resource in at least one RS resource in the first RS resource group.

**Embodiment 9**

Embodiment 9 illustrates a schematic diagram of a relationship between a first RS resource set and N index groups according to one embodiment of the present application, as shown in FIG. 9.

In Embodiment 9, there exist two transmission opportunities of one RS resource in the first RS resource set that are respectively associated with different index groups among the N index groups, a first index group is one of the N index groups, and N is a positive integer greater than 1.

As one embodiment, two transmission opportunities of a first RS resource are respectively associated with different index groups among the N index groups.

As one embodiment, all transmission opportunities of the first RS resource are associated with the same index group among the N index groups.

As one embodiment, all transmission opportunities of the first RS resource are associated with the first index group.

As one embodiment, index groups with which two transmission opportunities of one RS resource in the first RS resource set are respectively associated are respectively indicated by two signalings.

As one sub-embodiment of the above embodiment, the two signalings are respectively a higher layer signaling and a physical layer signaling.

As one sub-embodiment of the above embodiment, the two signalings are respectively an RRC signaling and a MAC CE signaling.

As one sub-embodiment of the above embodiment, the two signalings are respectively an RRC signaling and a DCI signaling.

As one sub-embodiment of the above embodiment, the two signalings are respectively a MAC CE signaling and a DCI signaling.

As one sub-embodiment of the above embodiment, the two signalings are respectively two physical layer signalings.

As one sub-embodiment of the above embodiment, the two signalings are respectively two DCI signalings.

As one embodiment, one index group among the N index groups associated with one transmission opportunity of one RS resource in the first RS resource set is indicated by a physical layer signaling.

As one embodiment, one index group among the N index groups associated with one transmission opportunity of one RS resource in the first RS resource set is indicated by a MAC CE signaling.

As one embodiment, one index group among the N index groups associated with one transmission opportunity of one RS resource in the first RS resource set is indicated by a DCI signaling.

## Embodiment 10

Embodiment 10 illustrates a schematic diagram of a first opportunity set according to one embodiment of the present application, as shown in FIG. 10.

In Embodiment 10, a plurality of transmission opportunities, which are not later than a CSI reference resource for a first CSI report, of one RS resource in a first RS resource set belong to the first opportunity set.

As one embodiment, a first CSI configuration comprises a higher layer parameter timeRestrictionForChannel-Measurements set to "Configured", and a plurality of transmission opportunities, which are not later than the CSI reference resource for the first CSI report, of one RS resource in the first RS resource set belong to the first opportunity set.

As one embodiment, the first opportunity set comprises only a plurality of transmission opportunities, which are not later than the CSI reference resource for the first CSI report, of one RS resource in the first RS resource set.

As one embodiment, the first opportunity set also comprises one transmission opportunity other than a plurality of transmission opportunities, which are not later than the CSI reference resource for the first CSI report, of one RS resource in the first RS resource set.

As one embodiment, any index group among N index groups is associated with at least one transmission opportunity among "the plurality of transmission opportunities, which are not later than the CSI reference resource for the first CSI report, of one RS resource in the first RS resource set" comprised in the first opportunity set.

As one embodiment, "the plurality of transmission opportunities, which are not later than the CSI reference resource for the first CSI report, of one RS resource in the first RS resource set" comprised in the first opportunity set is a minimum number of a plurality of latest transmission opportunities that meet both "any index group among the N index groups is associated with at least one transmission opportunity among the plurality of transmission opportunities" and "being not later than the CSI reference resource for the first CSI report".

As one embodiment, a plurality of transmission opportunities, which are not later than the CSI reference resource for the first CSI report, of a first RS resource belong to the first opportunity set.

As one sub-embodiment of the above embodiment, the first opportunity set comprises only a plurality of transmission opportunities, which are not later than the CSI reference resource for the first CSI report, of the first RS resource.

As one sub-embodiment of the above embodiment, the first opportunity set also comprises one transmission opportunity other than a plurality of transmission opportunities, which are not later than the CSI reference resource for the first CSI report, of the first RS resource.

As one sub-embodiment of the above embodiment, the first CSI configuration comprises a higher layer parameter timeRestrictionForChannelMeasurements set to "Configured".

As one sub-embodiment of the above embodiment, any index group among the N index groups is associated with at least one transmission opportunity among "the plurality of transmission opportunities, which are not later than the CSI reference resource for the first CSI report, of the first RS resource" comprised in the first opportunity set.

As one sub-embodiment of the above embodiment, "the plurality of transmission opportunities, which are not later than the CSI reference resource for the first CSI report, of the first RS resource" comprised in the first opportunity set is a minimum number of a plurality of latest transmission opportunities that meet both "any index group among the N index groups is associated with at least one transmission opportunity among the plurality of transmission opportunities" and "being not later than the CSI reference resource for the first CSI report".

## Embodiment 11

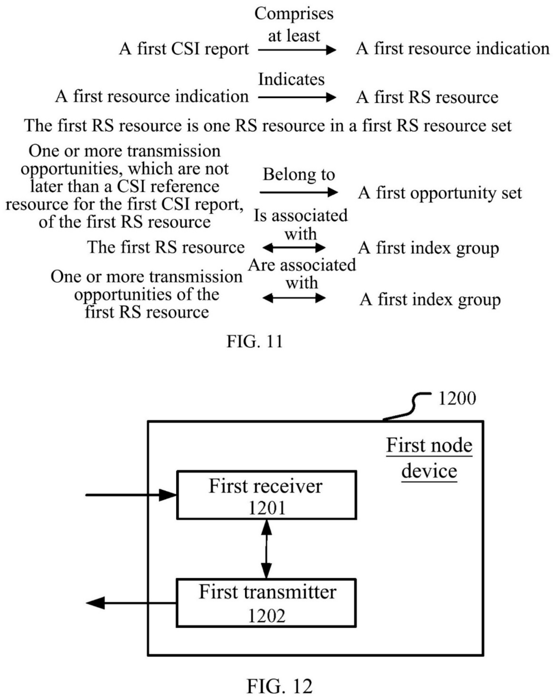

Embodiment 11 illustrates a schematic diagram of a first resource indication according to one embodiment of the present application, as shown in FIG. 11.

In Embodiment 11, a first CSI report comprises at least the first resource indication, the first resource indication indicates a first RS resource, the first RS resource is one RS resource in a first RS resource set, and one or more transmission opportunities, which are not later than a CSI reference resource for the first CSI report, of the first RS resource belong to a first opportunity set; and the first RS resource is associated with a first index group, or one or more transmission opportunities of the first RS resource are associated with the first index group.

As one embodiment, only one transmission opportunity, which is not later than the CSI reference resource for the first CSI report, of the first RS resource belongs to the first opportunity set.

As one embodiment, a plurality of transmission opportunities, which are not later than the CSI reference resource for the first CSI report, of the first RS resource belong to the first opportunity set.

As one embodiment, the first opportunity set is composed of one or more transmission opportunities, which are not later than the CSI reference resource for the first CSI report, of the first RS resource.

As one embodiment, the first opportunity set comprises one or more transmission opportunities, which are not later than the CSI reference resource for the first CSI report, of the first RS resource, and the first opportunity set also comprises one or more transmission opportunities, which are not later than the CSI reference resource for the first CSI report, of one RS resource other than the first RS resource in the first RS resource set.

As one embodiment, the first opportunity set comprises one or more transmission opportunities, which are not later than the CSI reference resource for the first CSI report, of the first RS resource, and the first opportunity set also comprises one or more transmission opportunities, which are not later than the CSI reference resource for the first CSI report, of one RS resource other than the first RS resource in a first RS resource group.

As one embodiment, the first opportunity set is composed of one transmission opportunity, which is not later than the CSI reference resource for the first CSI report, of the first RS resource.

As one embodiment, the first opportunity set comprises one transmission opportunity, which is not later than the CSI reference resource for the first CSI report, of the first RS resource, and the first opportunity set also comprises one transmission opportunity, which is not later than the CSI reference resource for the first CSI report, of one RS resource other than the first RS resource in the first RS resource set.

As one embodiment, the first opportunity set comprises one transmission opportunity, which is not later than the CSI reference resource for the first CSI report, of the first RS resource, and the first opportunity set also comprises one transmission opportunity, which is not later than the CSI reference resource for the first CSI report, of one RS resource other than the first RS resource in the first RS resource group.

As one embodiment, the first RS resource is associated with the first index group.

As one embodiment, one or more transmission opportunities of the first RS resource are associated with the first index group.

As one embodiment, the first resource indication is used for indicating the first RS resource from the first RS resource group, and the first RS resource group comprises all RS resources in the first RS resource set that are associated with the first index group.

As one embodiment, the first resource indication is used for indicating the first RS resource from the first RS resource group, and the first RS resource group comprises all RS resources in the first RS resource set that meet "there exists one transmission opportunity associated with the first index group".

## Embodiment 12

Embodiment 12 illustrates a structural block diagram of a processing apparatus used in a first node device according to one embodiment of the present application, as shown in FIG. 12. In FIG. 12, the processing apparatus 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {the antenna 452, a transmitting device 454, a transmitting processor 468, a multi-antenna transmitting processor 457, the controller/processor 459, the memory 460, and the data source 467} in Embodiment 4.

The first receiver 1201 receives a first CSI report configuration; and the first transmitter 1202 sends a first CSI report.

In Embodiment 12, the first CSI report configuration indicates a first RS resource set, and the first RS resource set comprises one or more RS resources; a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set, or the first opportunity set depends on the first index group.

As one embodiment, the first index group depends on the first opportunity set.

As one embodiment, the first opportunity set depends on the first index group.

As one embodiment, the first opportunity set comprises a latest transmission opportunity, which is not later than the CSI reference resource for the first CSI report, of at least one RS resource in the first RS resource set, the first index group is one index group among N index groups that is associated with the first opportunity set, and N is a positive integer greater than 1.

As one embodiment, one RS resource in the first RS resource set is associated with one or more index groups among the N index groups, the first index group is one of the N index groups, and N is a positive integer greater than 1; the first opportunity set comprises at least one transmission opportunity, which is not later than the CSI reference resource for the first CSI report, of at least one RS resource in the first RS resource set that is associated with the first index group.

As one embodiment, one transmission opportunity of one RS resource in the first RS resource set is associated with one index group among the N index groups, the first index group is one of the N index groups, and N is a positive integer greater than 1; and the first opportunity set comprises at least one transmission opportunity, which is not later than the CSI reference resource for the first CSI report and is associated with the first index group, of at least one RS resource in the first RS resource set.

As one embodiment, there exist two transmission opportunities of one RS resource in the first RS resource set that are respectively associated with different index groups among the N index groups, the first index group is one of the N index groups, and N is a positive integer greater than 1.

As one embodiment, a plurality of transmission opportunities, which are not later than the CSI reference resource for the first CSI report, of one RS resource in the first RS resource set belong to the first opportunity set.

As one embodiment, the first CSI report comprises at least a first resource indication, the first resource indication indicates a first RS resource, the first RS resource is one RS resource in the first RS resource set, and one or more transmission opportunities, which are not later than the CSI reference resource for the first CSI report, of the first RS resource belong to the first opportunity set; and the first RS resource is associated with the first index group, or one or more transmission opportunities of the first RS resource are associated with the first index group.

## Embodiment 13

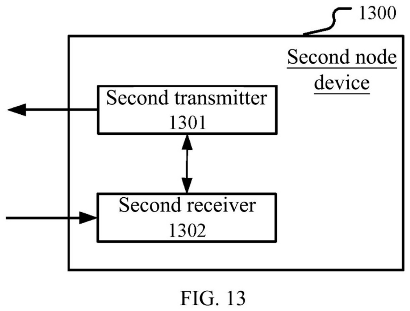

Embodiment 13 illustrates a structural block diagram of a processing apparatus used in a second node device according to one embodiment of the present application, as shown in FIG. 13. In FIG. 13, the processing apparatus 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1302 comprises at least one of {the antenna 420, a receiving device 418, a receiving processor 470, a multi-antenna receiving processor 472, the controller/processor 475, and the memory 476} in Embodiment 4.

The second transmitter 1301 sends a first CSI report configuration; and the second receiver 1302 receives a first CSI report.

In Embodiment 13, the first CSI report configuration indicates a first RS resource set, and the first RS resource set comprises one or more RS resources; a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report; the first CSI report corresponds to a first index group; the first index group comprises at least one index; and the first index group depends on the first opportunity set, or the first opportunity set depends on the first index group.

As one embodiment, the first index group depends on the first opportunity set.

As one embodiment, the first opportunity set depends on the first index group.

As one embodiment, the first opportunity set comprises a latest transmission opportunity, which is not later than the CSI reference resource for the first CSI report, of at least one RS resource in the first RS resource set, the first index group is one index group among N index groups that is associated with the first opportunity set, and N is a positive integer greater than 1.

As one embodiment, one RS resource in the first RS resource set is associated with one or more index groups among the N index groups, the first index group is one of the N index groups, and N is a positive integer greater than 1;the first opportunity set comprises at least one transmission opportunity, which is not later than the CSI reference resource for the first CSI report, of at least one RS resource in the first RS resource set that is associated with the first index group.

As one embodiment, one transmission opportunity of one RS resource in the first RS resource set is associated with one index group among the N index groups, the first index group is one of the N index groups, and N is a positive integer greater than 1; and the first opportunity set comprises at least one transmission opportunity, which is not later than the CSI reference resource for the first CSI report and is associated with the first index group, of at least one RS resource in the first RS resource set.

As one embodiment, there exist two transmission opportunities of one RS resource in the first RS resource set that are respectively associated with different index groups among the N index groups, the first index group is one of the N index groups, and N is a positive integer greater than 1.

As one embodiment, a plurality of transmission opportunities, which are not later than the CSI reference resource for the first CSI report, of one RS resource in the first RS resource set belong to the first opportunity set.

As one embodiment, the first CSI report comprises at least a first resource indication, the first resource indication indicates a first RS resource, the first RS resource is one RS resource in the first RS resource set, and one or more transmission opportunities, which are not later than the CSI reference resource for the first CSI report, of the first RS resource belong to the first opportunity set; and the first RS resource is associated with the first index group, or one or more transmission opportunities of the first RS resource are associated with the first index group.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combinations. The user equipment, terminals and UE in the present application include but are not limited to drones, communication modules on the drones, remote-controlled airplanes, aircrafts, small airplanes, mobile phones, tablet computers, notebook computers, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base station or system device in the present application includes but is not limited to macrocellular base stations, microcellular base stations, Femtocells, relay base stations, gNBs (NR nodes B), TRPs (Transmitter Receiver Points), and other wireless communication devices.

The above is only preferred embodiments of the present application and is not intended to limit the scope of protection of the present application. Any change and modification made based on the embodiments described in the specification, if similar partial or complete technical effects can be obtained, should be deemed obvious and belong to the scope of protection of the present invention.

**Claims**

1. A first node device for wireless communication, comprising:

a first receiver receiving a first CSI report configuration, the first CSI report configuration being IE CSI-ReportConfig, the first CSI report configuration indicating a first RS resource set, the first RS resource set comprising a plurality of RS resources, and each RS resource in the first RS resource set being a CSI-RS resource or an SS/PBCH block resource; and
a first transmitter sending a first CSI report, wherein the first CSI report configuration is used for configuring N CSI reports, and the first CSI report is one of the N CSI reports; the first CSI report corresponds to a first index group, and the first index group comprises at least one index; the N CSI reports respectively correspond to N index groups, and the first index group is one index group among the N index groups that corresponds to the first CSI report; the first CSI report corresponding to a first index group comprises: the first index group is configured to the first CSI report; and the first index group is one of the N index groups, any index group among the N index groups indicates at least one RS resource, and N is a positive integer greater than 1,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report;
the first index group depends on the first opportunity set, the first index group depending on the first opportunity set comprising: the first opportunity set comprises at least one transmission opportunity of at least one RS resource, and the first index group is one index group among the N index groups that is associated with the at least one RS resource; or, the first opportunity set depends on the first index group, the first opportunity set depending on the first index group comprising: the first opportunity set comprises at least one transmission opportunity of at least one RS resource in the first RS resource set that is associated with the first index group; and

a given RS resource is one RS resource in the first RS resource set, a given index group is the first index group, and the given RS resource being associated with the given index group comprises: the given index group indicates at least one RS resource, and the given RS resource belongs to the at least one RS resource.

2. The first node device according to claim 1, wherein the first index group is one of the N index groups, and N is a positive integer greater than 1; any index group among the N index groups comprises at least one CSI-RS resource index; and a given RS resource is one RS resource in the first RS resource set, a given index group is the first index group, and the given RS resource being associated with the given index group comprises: the given index group comprises at least one resource index, the at least one resource index is used for indicating or identifying at least one RS resource, and the given RS resource belongs to the at least one RS resource.

3. The first node device according to claim 1 or 2, wherein any RS resource in the first RS resource set is associated with only one index group among the N index groups; or, any transmission opportunity of one RS resource in the first RS resource set is associated with one index group among the N index groups.

4. The first node device according to any one of claims 1 to 3, wherein the first CSI report configuration also indicates which index group or index groups among the N index groups one RS resource in the first RS resource set is associated with.

5. The first node device according to any one of claims 1 to 4, wherein the first index group is one index group among the N index groups that is associated with the first opportunity set, and N is a positive integer greater than 1; the one index group associated with the first opportunity set is: one index group associated with any transmission opportunity in the first opportunity set; and a given transmission opportunity is one transmission opportunity in the first opportunity set, a given index group is the first index group, and the given transmission opportunity being associated with the given index group comprises: the given transmission opportunity is one transmission opportunity of the given RS resource, and the given RS resource is associated with the given index group.

6. The first node device according to claim 5, wherein the first opportunity set comprises a latest transmission opportunity, which is not later than the CSI reference resource for the first CSI report, of at least one RS resource in the first RS resource set.

7. The first node device according to any one of claims 1 to 4, wherein one RS resource in the first RS resource set is associated with one or more index groups among the N index groups, the first index group is one of the N index groups, and N is a positive integer greater than 1; and the first opportunity set comprises at least one transmission opportunity, which is not later than the CSI reference resource for the first CSI report, of at least one RS resource in the first RS resource set that is associated with the first index group.

8. The first node device according to any one of claims 1 to 7, wherein the first CSI report comprises at least a first resource indication, and the first resource indication indicates a first RS resource; the first RS resource is a CSI-RS resource, and the first resource indication is a CRI; or, the first RS resource is an SS/PBCH block resource, and the first resource indication is an SSBRI; the first resource indication indicating the first RS resource means: the first resource indication is used for indicating the first RS resource from a first RS resource group, and the first RS resource group is composed of at least one RS resource in the first RS resource set; the first RS resource is one RS resource in the first RS resource set, and one or more transmission opportunities, which are not later than the CSI reference resource for the first CSI report, of the first RS resource belong to the first opportunity set; the first RS resource is associated with the first index group; and a given RS resource is the first RS resource, a given index group is the first index group, and the given RS resource being associated with the given index group comprises: the given index group indicates at least one RS resource, and the given RS resource belongs to the at least one RS resource.

9. The first node device according to claim 8, wherein the first opportunity set comprises at least one transmission opportunity, which is not later than a CSI reference resource for the first CSI report, of each RS resource in the at least one RS resource in the first RS resource group; and the first RS resource group comprises all RS resources in the first RS resource set that are associated with the first index group.

10. The first node device according to claim 8 or 9, wherein the number of RS resources comprised in the first RS resource group is *b,* and a load size of the first resource indication is $\lceil \log_2 b \rceil$ bits.

11. The first node device according to any one of claims 1 to 10, wherein a channel measurement resource for the first CSI report configuration comprises the first RS resource set; and
the first CSI report configuration comprises a first CSI resource configuration, and the first CSI resource configuration indicates the first RS resource set; or, the first CSI report configuration comprises a plurality of CSI resource configurations, the first CSI resource configuration is one of the plurality of CSI resource configurations, and the first CSI resource configuration indicates the first RS resource set.

12. The first node device according to any one of claims 1 to 11, wherein the first CSI configuration comprises a higher layer parameter timeRestrictionForChannelMeasurements set to *"notConfigured",* or, the first CSI configuration comprises a higher layer parameter timeRestrictionForChannelMeasurements set to "Configured".

13. The first node device according to any one of claims 1 to 12, wherein the CSI reference resource for the first CSI report is a frequency domain resource targeted by the first CSI report in a frequency domain, the CSI reference resource for the first CSI report is a first downlink slot in a time domain, the first downlink slot depends on a second uplink slot, and the second uplink slot is an uplink slot sending the first CSI report.

14. The first node device according to any one of claims 1 to 13, wherein the first CSI report is periodic or semi-persistent;

or, the first CSI report is semi-persistent, and the first CSI report is activated by one MAC CE; or, the first CSI report is semi-persistent, and when a first node is triggered by one piece of DCI, the first node sends the first CSI report on a PUSCH;
or, the first CSI report is aperiodic, the first CSI report is triggered by one piece of DCI, the one piece of DCI comprises a CSI request field, the CSI request field of the one piece of DCI is used for indicating one trigger state, and the one trigger state indicates the first CSI report configuration.

15. A second node device for wireless communication, comprising:

a second transmitter sending a first CSI report configuration, the first CSI report configuration being IE CSI-ReportConfig, the first CSI report configuration indicating a first RS resource set, the first RS resource set comprising a plurality of RS resources, and each RS resource in the first RS resource set being a CSI-RS resource or an SS/PBCH block resource; and
a second receiver receiving a first CSI report, wherein the first CSI report configuration is used for configuring N CSI reports, and the first CSI report is one of the N CSI reports; the first CSI report corresponds to a first index group, and the first index group comprises at least one index; the N CSI reports respectively corresponds to N index groups, and the first index group is one index group among the N index groups that corresponds to the first CSI report; the first CSI report corresponding to a first index group comprises: the first index group is configured to the first CSI report; and the first index group is one of the N index groups, any index group among the N index groups indicates at least one RS resource, and N is a positive integer greater than 1,
wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report;
the first index group depends on the first opportunity set, the first index group depending on the first opportunity set comprising: the first opportunity set comprises at least one transmission opportunity of at least one RS resource, and the first index group is one index group among the N index groups that is associated with the at least one RS resource; or, the first opportunity set depends on the first index group, the first opportunity set depending on the first index group comprising: the first opportunity set comprises at least one transmission opportunity of at least one RS resource in the first RS resource set that is associated with the first index group; and
a given RS resource is one RS resource in the first RS resource set, a given index group is the first index group, and the given RS resource being associated with the given index group comprises: the given index group indicates at least one RS resource, and the given RS resource belongs to the at least one RS resource.

16. The second node device according to claim 15, wherein the first index group is one of the N index groups, and N is a positive integer greater than 1; any index group among the N index groups comprises at least one CSI-RS resource index; and a given RS resource is one RS resource in the first RS resource set, a given index group is the first index group, and the given RS resource being associated with the given index group comprises: the given index group comprises at least one resource index, the at least one resource index is used for indicating or identifying at least one RS resource, and the given RS resource belongs to the at least one RS resource.

17. The second node device according to claim 15 or 16, wherein any RS resource in the first RS resource set is associated with only one index group among the N index groups; or, any transmission opportunity of one RS resource in the first RS resource set is associated with one index group among the N index groups.

18. The second node device according to any one of claims 15 to 17, wherein the first CSI report configuration also indicates which index group or index groups among the N index groups one RS resource in the first RS resource set is associated with.

19. The second node device according to any one of claims 15 to 18, wherein the first index group is one index group among the N index groups that is associated with the first opportunity set, and N is a positive integer greater than 1; the one index group associated with the first opportunity set is: one index group associated with any transmission opportunity in the first opportunity set; and a given transmission opportunity is one transmission opportunity in the first opportunity set, a given index group is the first index group, and the given transmission opportunity being associated with the given index group comprises: the given transmission opportunity is one transmission opportunity of the given RS resource, and the given RS resource is associated with the given index group.

20. The second node device according to claim 19, wherein the first opportunity set comprises a latest transmission opportunity, which is not later than the CSI reference resource for the first CSI report, of at least one RS resource in the first RS resource set.

21. The second node device according to any one of claims 15 to 18, wherein one RS resource in the first RS resource set is associated with one or more index groups among the N index groups, the first index group is one of the N index groups, and N is a positive integer greater than 1; and the first opportunity set comprises at least one transmission opportunity, which is not later than the CSI reference resource for the first CSI report, of at least one RS resource in the first RS resource set that is associated with the first index group.

22. The second node device according to any one of claims 15 to 21, wherein the first CSI report comprises at least a first resource indication, and the first resource indication indicates a first RS resource; the first RS resource is a CSI-RS resource, and the first resource indication is a CRI; or, the first RS resource is an SS/PBCH block resource, and the first resource indication is an SSBRI; the first resource indication indicating the first RS resource means: the first resource indication is used for indicating the first RS resource from a first RS resource group, and the first RS resource group is composed of at least one RS resource in the first RS resource set; the first RS resource is one RS resource in the first RS resource set, and one or more transmission opportunities, which are not later than the CSI reference resource for the first CSI report, of the first RS resource belong to the first opportunity set; the first RS resource is associated with the first index group; and a given RS resource is the first RS resource, a given index group is the first index group, and the given RS resource being associated with the given index group comprises: the given index group indicates at least one RS resource, and the given RS resource belongs to the at least one RS resource.

23. The second node device according to claim 22, wherein the first opportunity set comprises at least one transmission opportunity, which is not later than a CSI reference resource for the first CSI report, of each RS resource in the at least one RS resource in the first RS resource group; and the first RS resource group comprises all RS resources in the first RS resource set that are associated with the first index group.

24. The second node device according to claim 22 or 23, wherein the number of RS resources comprised in the first RS resource group is b, and a load size of the first resource indication is $\lceil \log_2 b \rceil$ bits.

25. The second node device according to any one of claims 15 to 24, wherein a channel measurement resource for the first CSI report configuration comprises the first RS resource set; and
the first CSI report configuration comprises a first CSI resource configuration, and the first CSI resource configuration indicates the first RS resource set; or, the first CSI report configuration comprises a plurality of CSI resource configurations, the first CSI resource configuration is one of the plurality of CSI resource configurations, and the first CSI resource configuration indicates the first RS resource set.

26. The second node device according to any one of claims 15 to 25, wherein the first CSI configuration comprises a higher layer parameter timeRestrictionForChannelMeasurements set to *"notConfigured"*, or, the first CSI configuration comprises a higher layer parameter timeRestrictionForChannelMeasurements set to "Configured".

27. The second node device according to any one of claims 15 to 26, wherein the CSI reference resource for the first CSI report is a frequency domain resource targeted by the first CSI report in a frequency domain, the CSI reference resource for the first CSI report is a first downlink slot in a time domain, the first downlink slot depends on a second uplink slot, and the second uplink slot is an uplink slot sending the first CSI report.

28. The second node device according to any one of claims 15 to 27, wherein the first CSI report is periodic or semi-persistent;

   or, the first CSI report is semi-persistent, and the first CSI report is activated by one MAC CE; or, the first CSI report is semi-persistent, and when a first node is triggered by one piece of DCI, the first node sends the first CSI report on a PUSCH;
   or, the first CSI report is aperiodic, the first CSI report is triggered by one piece of DCI, the one piece of DCI comprises a CSI request field, the CSI request field of the one piece of DCI is used for indicating one trigger state, and the one trigger state indicates the first CSI report configuration.

29. A method used in a first node for wireless communication, comprising:

   receiving a first CSI report configuration, the first CSI report configuration being IE CSI-ReportConfig, the first CSI report configuration indicating a first RS resource set, the first RS resource set comprising a plurality of RS resources, and each RS resource in the first RS resource set being a CSI-RS resource or an SS/PBCH block resource; and
   sending a first CSI report, wherein the first CSI report configuration is used for configuring N CSI reports, and the first CSI report is one of the N CSI reports; the first CSI report corresponds to a first index group, and the first index group comprises at least one index; the N CSI reports respectively corresponds to N index groups, and the first index group is one index group among the N index groups that corresponds to the first CSI report; the first CSI report corresponding to a first index group comprises: the first index group is configured to the first CSI report; and the first index group is one of the N index groups, any index group among the N index groups indicates at least one RS resource, and N is a positive integer greater than 1,
   wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report;
   the first index group depends on the first opportunity set, the first index group depending on the first opportunity set comprising: the first opportunity set comprises at least one transmission opportunity of at least one RS resource, and the first index group is one index group among the N index groups that is associated with the at least one RS resource; or, the first opportunity set depends on the first index group, the first opportunity set depending on the first index group comprising: the first opportunity set comprises at least one transmission opportunity of at least one RS resource in the first RS resource set that is associated with the first index group; and
   a given RS resource is one RS resource in the first RS resource set, a given index group is the first index group, and the given RS resource being associated with the given index group comprises: the given index group indicates at least one RS resource, and the given RS resource belongs to the at least one RS resource.

30. The method according to claim 29, wherein the first index group is one of the N index groups, and N is a positive integer greater than 1; any index group among the N index groups comprises at least one CSI-RS resource index; and a given RS resource is one RS resource in the first RS resource set, a given index group is the first index group, and the given RS resource being associated with the given index group comprises: the given index group comprises at least one resource index, the at least one resource index is used for indicating or identifying at least one RS resource, and the given RS resource belongs to the at least one RS resource.

31. The method according to claim 29 or 30, wherein any RS resource in the first RS resource set is associated with only one index group among the N index groups;or, any transmission opportunity of one RS resource in the first RS resource set is associated with one index group among the N index groups.

32. The method according to any one of claims 29 to 31, wherein the first CSI report configuration also indicates which index group or index groups among the N index groups one RS resource in the first RS resource set is associated with.

33. The method according to any one of claims 29 to 32, wherein the first index group is one index group among the N index groups that is associated with the first opportunity set, and N is a positive integer greater than 1; the one index group associated with the first opportunity set is: one index group associated with any transmission opportunity in the first opportunity set; and a given transmission opportunity is one transmission opportunity in the first opportunity set, a given index group is the first index group, and the given transmission opportunity being associated with the given index group comprises: the given transmission opportunity is one transmission opportunity of the given RS resource, and the given RS resource is associated with the given index group.

34. The method according to claim 33, wherein the first opportunity set comprises a latest transmission opportunity, which is not later than the CSI reference resource for the first CSI report, of at least one RS resource in the first RS resource set.

35. The method according to any one of claims 29 to 32, wherein one RS resource in the first RS resource set is associated with one or more index groups among the N index groups, the first index group is one of the N index groups, and N is a positive integer greater than 1; and the first opportunity set comprises at least one transmission opportunity, which is not later than the CSI reference resource for the first CSI report, of at least one RS resource in the first RS resource set that is associated with the first index group.

36. The method according to any one of claims 29 to 35, wherein the first CSI report comprises at least a first resource indication, and the first resource indication indicates a first RS resource; the first RS resource is a CSI-RS resource, and the first resource indication is a CRI; or, the first RS resource is an SS/PBCH block resource, and the first resource indication is an SSBRI; the first resource indication indicating the first RS resource means: the first resource indication is used for indicating the first RS resource from a first RS resource group, and the first RS resource group is composed of at least one RS resource in the first RS resource set; the first RS resource is one RS resource in the first RS resource set, and one or more transmission opportunities, which are not later than the CSI reference resource for the first CSI report, of the first RS resource belong to the first opportunity set; the first RS resource is associated with the first index group; and a given RS resource is the first RS resource, a given index group is the first index group, and the given RS resource being associated with the given index group comprises: the given index group indicates at least one RS resource, and the given RS resource belongs to the at least one RS resource.

37. The method according to claim 36, wherein the first opportunity set comprises at least one transmission opportunity, which is not later than a CSI reference resource for the first CSI report, of each RS resource in the at least one RS resource in the first RS resource group; and the first RS resource group comprises all RS resources in the first RS resource set that are associated with the first index group.

38. The method according to claim 36 or 37, wherein the number of RS resources comprised in the first RS resource group is $b$, and a load size of the first resource indication is $\lceil \log_2 b \rceil$ bits.

39. The method according to any one of claims 29 to 38, wherein a channel measurement resource for the first CSI report configuration comprises the first RS resource set; and
the first CSI report configuration comprises a first CSI resource configuration, and the first CSI resource configuration indicates the first RS resource set; or, the first CSI report configuration comprises a plurality of CSI resource configurations, the first CSI resource configuration is one of the plurality of CSI resource configurations, and the first CSI resource configuration indicates the first RS resource set.

40. The method according to any one of claims 29 to 39, wherein the first CSI configuration comprises a higher layer parameter timeRestrictionForChannelMeasurements set to *"notConfigured"*, or, the first CSI configuration comprises a higher layer parameter timeRestrictionForChannelMeasurements set to "Configured".

41. The method according to any one of claims 29 to 40, wherein the CSI reference resource for the first CSI report is a frequency domain resource targeted by the first CSI report in a frequency domain, the CSI reference resource for the first CSI report is a first downlink slot in a time domain, the first downlink slot depends on a second uplink slot, and the second uplink slot is an uplink slot sending the first CSI report.

42. The method according to any one of claims 29 to 41, wherein the first CSI report is periodic or semi-persistent;

or, the first CSI report is semi-persistent, and the first CSI report is activated by one MAC CE; or, the first CSI report is semi-persistent, and when the first node is triggered by one piece of DCI, the first node sends the first CSI report on a PUSCH;

or, the first CSI report is aperiodic, the first CSI report is triggered by one piece of DCI, the one piece of DCI comprises a CSI request field, the CSI request field of the one piece of DCI is used for indicating one trigger state, and the one trigger state indicates the first CSI report configuration.

43. A method used in a second node for wireless communication, comprising:

sending a first CSI report configuration, the first CSI report configuration being IE CSI-ReportConfig, the first CSI report configuration indicating a first RS resource set, the first RS resource set comprising a plurality of RS resources, and each RS resource in the first RS resource set being a CSI-RS resource or an SS/PBCH block resource; and

receiving a first CSI report, wherein the first CSI report configuration is used for configuring N CSI reports, and the first CSI report is one of the N CSI reports; the first CSI report corresponds to a first index group, and the first index group comprises at least one index; the N CSI reports respectively corresponds to N index groups, and the first index group is one index group among the N index groups that corresponds to the first CSI report; the first CSI report corresponding to a first index group comprises: the first index group is configured to the first CSI report; and the first index group is one of the N index groups, any index group among the N index groups indicates at least one RS resource, and N is a positive integer greater than 1,

wherein a first opportunity set comprises at least one transmission opportunity, which is not later than a CSI reference resource for the first CSI report, of at least one RS resource in the first RS resource set, and the first opportunity set is used for obtaining a channel measurement for calculating the first CSI report;

the first index group depends on the first opportunity set, the first index group depending on the first opportunity set comprising: the first opportunity set comprises at least one transmission opportunity of at least one RS resource, and the first index group is one index group among the N index groups that is associated with the at least one RS resource; or, the first opportunity set depends on the first index group, the first opportunity set depending on the first index group comprising: the first opportunity set comprises at least one transmission opportunity of at least one RS resource in the first RS resource set that is associated with the first index group; and

a given RS resource is one RS resource in the first RS resource set, a given index group is the first index group, and the given RS resource being associated with the given index group comprises: the given index group indicates at least one RS resource, and the given RS resource belongs to the at least one RS resource.

44. The method according to claim 43, wherein the first index group is one of the N index groups, and N is a positive integer greater than 1; any index group among the N index groups comprises at least one CSI-RS resource index; and a given RS resource is one RS resource in the first RS resource set, a given index group is the first index group, and the given RS resource being associated with the given index group comprises: the given index group comprises at least one resource index, the at least one resource index is used for indicating or identifying at least one RS resource, and the given RS resource belongs to the at least one RS resource.

45. The method according to claim 43 or 44, wherein any RS resource in the first RS resource set is associated with only one index group among the N index groups;or, any transmission opportunity of one RS resource in the first RS resource set is associated with one index group among the N index groups.

46. The method according to any one of claims 43 to 45, wherein the first CSI report configuration also indicates which index group or index groups among the N index groups one RS resource in the first RS resource set is associated with.

47. The method according to any one of claims 43 to 46, wherein the first index group is one index group among the N index groups that is associated with the first opportunity set, and N is a positive integer greater than 1; the one index group associated with the first opportunity set is: one index group associated with any transmission opportunity in the first opportunity set; and a given transmission opportunity is one transmission opportunity in the first opportunity set, a given index group is the first index group, and the given transmission opportunity being associated with the given index group comprises: the given transmission opportunity is one transmission opportunity of the given RS resource, and the given RS resource is associated with the given index group.

48. The method according to claim 47, wherein the first opportunity set comprises a latest transmission opportunity, which is not later than the CSI reference resource for the first CSI report, of at least one RS resource in the first RS resource set.

49. The method according to any one of claims 43 to 46, wherein one RS resource in the first RS resource set is associated with one or more index groups among the N index groups, the first index group is one of the N index groups, and N is a positive integer greater than 1; and the first opportunity set comprises at least one transmission opportunity, which is not later than the CSI reference resource for the first CSI report, of at least one RS resource in the first RS resource set that is associated with the first index group.

50. The method according to any one of claims 43 to 49, wherein the first CSI report comprises at least a first resource indication, and the first resource indication indicates a first RS resource; the first RS resource is a CSI-RS resource, and the first resource indication is a CRI; or, the first RS resource is an SS/PBCH block resource, and the first resource indication is an SSBRI; the first resource indication indicating the first RS resource means: the first resource indication is used for indicating the first RS resource from a first RS resource group, and the first RS resource group is composed of at least one RS resource in the first RS resource set; the first RS resource is one RS resource in the first RS resource set, and one or more transmission opportunities, which are not later than the CSI reference resource for the first CSI report, of the first RS resource belong to the first opportunity set; the first RS resource is associated with the first index group; and a given RS resource is the first RS resource, a given index group is the first index group, and the given RS resource being associated with the given index group comprises: the given index group indicates at least one RS resource, and the given RS resource belongs to the at least one RS resource.

51. The method according to claim 50, wherein the first opportunity set comprises at least one transmission opportunity, which is not later than a CSI reference resource for the first CSI report, of each RS resource in the at least one RS resource in the first RS resource group; and the first RS resource group comprises all RS resources in the first RS resource set that are associated with the first index group.

52. The method according to claim 50 or 51, wherein the number of RS resources comprised in the first RS resource group is b, and a load size of the first resource indication is $\lceil \log_2 b \rceil$ bits.

53. The method according to any one of claims 43 to 52, wherein a channel measurement resource for the first CSI report configuration comprises the first RS resource set; and the first CSI report configuration comprises a first CSI resource configuration, and the first CSI resource configuration indicates the first RS resource set; or, the first CSI report configuration comprises a plurality of CSI resource configurations, the first CSI resource configuration is one of the plurality of CSI resource configurations, and the first CSI resource configuration indicates the first RS resource set.

54. The method according to any one of claims 43 to 53, wherein the first CSI configuration comprises a higher layer parameter timeRestrictionForChannelMeasurements set to *"notConfigured",* or, the first CSI configuration comprises a higher layer parameter timeRestrictionForChannelMeasurements set to "Configured".

55. The method according to any one of claims 43 to 54, wherein the CSI reference resource for the first CSI report is a frequency domain resource targeted by the first CSI report in a frequency domain, the CSI reference resource for the first CSI report is a first downlink slot in a time domain, the first downlink slot depends on a second uplink slot, and the second uplink slot is an uplink slot sending the first CSI report.

56. The method according to any one of claims 43 to 55, wherein the first CSI report is periodic or semi-persistent;

or, the first CSI report is semi-persistent, and the first CSI report is activated by one MAC CE; or, the first CSI report is semi-persistent, and when a first node is triggered by one piece of DCI, the first node sends the first CSI report on a PUSCH;
or, the first CSI report is aperiodic, the first CSI report is triggered by one piece of DCI, the one piece of DCI comprises a CSI request field, the CSI request field of the one piece of DCI is used for indicating one trigger state, and the one trigger state indicates the first CSI report configuration.

100

First node

101
Receive a first CSI report configuration

102
Send a first CSI report

FIG. 1

5GS/EPS 200

HSS/UDM — 220

NG-RAN
202

UE — 201

NR Node B — 203

MME/AMF/
SMF — 211

Other
MME/AMF/
SMF — 214

UE — 241

Other NR
Nodes B — 204

S-GW/UPF — 212

P-GW/UPF — 213

Internet service — 230

5GC/EPC
210

FIG. 2

Control plane
300

L3 — RRC — 306

PDCP — 304

305 — L2

RLC — 303

MAC — 302

L1 — PHY — 301

User plane
350

SDAP — 356

355 — L2 — PDCP — 354

RLC — 353

MAC — 352

L1 — PHY — 351

FIG. 3

FIG. 4

FIG. 5

A first opportunity set —Comprises→ A latest transmission opportunity, which is not later than a CSI reference resource for a first CSI report, of at least one RS resource in a first RS resource set

A first index group —Is→ One index group, which is associated with the first opportunity set, among N index groups

N is a positive integer greater than 1

FIG. 6

One RS resource in a first RS resource set — Is associated with ⟷ One or more index groups among N index groups

A first opportunity set — Comprises ⟶ At least one transmission opportunity, which is not later than a CSI reference resource for a first CSI report, of at least one RS resource, which is associated with a first index group, in the first RS resource set

The first index group is one of the N index groups, and N is a positive integer greater than 1

FIG. 7

One transmission opportunity of one RS resource in a first RS resource set — Is associated with ⟷ One index group among N index groups

A first opportunity set — Comprises ⟶ At least one transmission opportunity, which is not later than a CSI reference resource for a first CSI report and is associated with a first index group, of at least one RS resource in the first RS resource set

The first index group is one of the N index groups, and N is a positive integer greater than 1

FIG. 8

There exist two transmission opportunities of one RS resource in a first RS resource set — That are associated with ⟷ Different index groups among N index groups

A first index group is one of the N index groups, and N is a positive integer greater than 1

FIG. 9

A plurality of transmission opportunities, which are not later than a CSI reference resource for a first CSI report, of one RS resource in a first RS resource set — Belong to ⟶ A first opportunity set

FIG. 10

A first CSI report $\xrightarrow{\text{Comprises at least}}$ A first resource indication

A first resource indication $\xrightarrow{\text{Indicates}}$ A first RS resource

The first RS resource is one RS resource in a first RS resource set

One or more transmission opportunities, which are not later than a CSI reference resource for the first CSI report, of the first RS resource $\xrightarrow{\text{Belong to}}$ A first opportunity set

The first RS resource $\xleftrightarrow{\text{Is associated with}}$ A first index group

One or more transmission opportunities of the first RS resource $\xleftrightarrow{\text{Are associated with}}$ A first index group

FIG. 11

1200

First node device

First receiver 1201

First transmitter 1202

FIG. 12

EP 4 712 394 A1

FIG. 13

## INTERNATIONAL SEARCH REPORT

| International application No. |
| --- |
| **PCT/CN2024/091177** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC: H04L; H04B

Documentation searched other than minimum documentation to the extent that such documents are included in the fields searched

Electronic data base consulted during the international search (name of data base and, where practicable, search terms used)

DWPI, CNTXT, ENTXTC, CNKI, 3GPP: IE, CSI-reportconfig, occasion, index, indices, CSI, langbo, SS/PBCH, measurement, association, 时机, 索引, RS, 资源, 测量, 关联

### C. DOCUMENTS CONSIDERED TO BE RELEVANT

| Category* | Citation of document, with indication, where appropriate, of the relevant passages | Relevant to claim No. |
| --- | --- | --- |
| A | CN 115378558 A (SHANGHAI LANGBO COMMUNICATION TECHNOLOGY CO., LTD.) 22 November 2022 (2022-11-22) description, paragraphs [0112]-[0115], [0140], [0277] and [0278] | 1-56 |
| A | CN 114793150 A (SHANGHAI TUILUO COMMUNICATION TECHNOLOGY PARTNERSHIP ENTERPRISE (LIMITED PARTNERSHIP)) 26 July 2022 (2022-07-26) entire document | 1-56 |
| A | CN 115643134 A (SHANGHAI TUILUO COMMUNICATION TECHNOLOGY PARTNERSHIP ENTERPRISE (LIMITED PARTNERSHIP)) 24 January 2023 (2023-01-24) entire document | 1-56 |
| A | QUECTEL et al. "Discussion on CSI Feedback Enhancements" *3GPP TSG RAN WG1 #106-e, R1- 2106837,* 27 August 2021 (2021-08-27), entire document | 1-56 |
| A | US 2022006584 A1 (SHANGHAI LANGBO COMMUNICATION TECHNOLOGY CO., LTD.) 06 January 2022 (2022-01-06) entire document | 1-56 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 August 2024** | **21 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/091177**

| Patent document cited in search report | | | Publication date (day/month/year) | Patent family member(s) | | | Publication date (day/month/year) |
|---|---|---|---|---|---|---|---|
| CN | 115378558 | A | 22 November 2022 | US | 2022376881 | A1 | 24 November 2022 |
| CN | 114793150 | A | 26 July 2022 | WO | 2022161233 | A1 | 04 August 2022 |
| | | | | US | 2023362668 | A1 | 09 November 2023 |
| CN | 115643134 | A | 24 January 2023 | US | 2023014273 | A1 | 09 November 2023 |
| US | 2022006584 | A1 | 06 January 2022 | US | 2024214146 | A1 | 27 June 2024 |
| | | | | CN | 113904758 | A | 07 January 2022 |
| | | | | CN | 113938170 | A | 14 January 2022 |

Form PCT/ISA/210 (patent family annex) (July 2022)